# EUROPEAN PATENT APPLICATION

(11) **EP 4 797 852 A1**
(43) Date of publication of application: **26.08.2026**
(21) Application number: 24887878.7
(22) Date of filing: 01.11.2024
(51) Int. Cl.: H04W 72/542

(54) **COMMUNICATION METHOD AND COMMUNICATION APPARATUS**

(30) Priority: 07.11.2023 CN 202311480121
(71) Applicant: HUAWEI TECHNOLOGIES CO., LTD., Shenzhen, Guangdong 518129 (CN)
(72) Inventor: NAREN, Gerile, Shenzhen, Guangdong 518129 (CN); HUANG, Lei, Shenzhen, Guangdong 518129 (CN); DU, Rui, Shenzhen, Guangdong 518129 (CN); CHITRAKAR, Rojan, Shenzhen, Guangdong 518129 (CN)
(74) Representative: Pfenning, Meinig & Partner mbB
(86) International application number: PCT/CN2024/129393
(87) International publication number: WO 2025/098266

(57) **Abstract**

This application provides a communication method and a communication apparatus, to implement a measurement between APs. The communication method includes: A STA sends a first message to a first AP, where the first message indicates the first AP to measure channel state information between the first AP and a second AP; and the first AP measures the channel state information between the first AP and the second AP based on the first message, and feeds back the channel state information to the STA. The technical solutions in embodiments of this application may be applied to a WLAN communication system like a sensing system, a positioning system, a ranging system, or an ultra-wideband UWB system, and may be further applied to a WLAN communication device that supports 802.11be, 802.11bn, or subsequent evolution.

## Description

This application claims priority to Chinese Patent Application No. 202311480121.6, filed with the China National Intellectual Property Administration on November 7, 2023 and entitled "COMMUNICATION METHOD AND COMMUNICATION APPARATUS", which is incorporated herein by reference in its entirety.

### TECHNICAL FIELD

Embodiments of this application relate to the field of communication, and in particular, to a communication method and a communication apparatus.

### BACKGROUND

With the development of wireless local area networks and wireless cellular technologies, sensing may be implemented based on communication between devices.

However, in an existing sensing technology, sensing is basically implemented based on communication between an access point (access point, AP) and a station (station, STA), and there is a lack of sensing methods for implementing sensing based on communication between APs.

### SUMMARY

This application provides a communication method, to implement sensing based on communication between APs.

According to a first aspect, this application provides a communication method, applied to a first access point AP. The method includes: receiving a first message from a station STA, where the first message indicates the first AP to measure channel state information (channel state information, CSI) between the first AP and a second AP; measuring the channel state information between the first AP and the second AP based on the first message; and feeding back the channel state information to the STA.

In this embodiment of this application, the second AP establishes a sensing measurement session with the STA, and the STA needs to measure a channel between the second AP and the STA based on a null data physical layer protocol data unit (null data physical layer protocol data unit, NDP) sent by the second AP, to implement sensing based on CSI between the second AP and the STA. In other words, when sensing is implemented based on the STA and the second AP, the STA is a sensing initiator and undertakes a role of a sensing receiver, and the second AP is a sensing responder and undertakes a role of a sensing transmitter.

In a possible implementation, that the first message indicates the first AP to measure the CSI between the first AP and the second AP in this embodiment of this application may be replaced with: the first message indicates the first AP to measure the CSI between the first AP and the second AP based on the NDP sent by the second AP.

In this embodiment of this application, the STA sends the first message to the first AP, where the first message indicates the first AP to measure the CSI between the first AP and the second AP. Correspondingly, for the first AP, after receiving the first message, the first AP receives a sensing NDP announcement (sensing NDP announcement, sensing NDPA) message sent by the STA to the second AP and receives the NDP sent by the second AP. The sensing NDPA message sent by the STA to the second AP includes some parameters used to parse the NDP sent by the second AP. Then, the first AP measures the channel between the first AP and the second AP based on the NDP sent by the second AP and the sensing NDPA message sent by the STA to the second AP, obtains the CSI between the first AP and the second AP, and feeds back the CSI to the STA, so that the STA learns of the CSI between the first AP and the second AP. In other words, in this embodiment, that the first AP measures the channel state information between the first AP and the second AP based on the first message includes: receiving, based on the first message, the sensing NDPA message sent by the STA to the second AP; receiving the NDP sent by the second AP; and obtaining the CSI between the first AP and the second AP based on the NDP sent by the second AP and the sensing NDPA message.

It can be learned that, in this embodiment of this application, the STA sends, to the first AP, the first message indicating the first AP to measure the CSI between the first AP and the second AP, to trigger the first AP to measure the CSI between the first AP and the second AP based on the NDP sent by the second AP. In other words, the STA sends the first message to the first AP, to trigger a CSI measurement between APs.

Further, after the CSI between the first AP and the second AP is obtained, sensing of a sensing target may be implemented based on the CSI between the first AP and the second AP (that is, sensing is performed based on the CSI between the APs). For example, an example of the sensing target is a human body.

In addition, it may be understood that, when sensing is implemented based on the CSI between the APs, accuracy of the sensing may be improved in some scenarios. For example, in an environment in which a plurality of routers (which may be considered as APs) and terminal devices (which may be considered as STAs) are deployed, when sensing is performed based on CSI between the routers and the terminal devices, if the terminal device moves, it is difficult to determine whether a change of the CSI is caused by movement of a sensing target or movement of the terminal device, and consequently, a sensing result is inaccurate. However, if the method for performing sensing based on CSI between APs provided in this application is used, because a location of the router is usually unchanged, accuracy of sensing can be improved compared with a manner of performing sensing based on CSI between the router and the terminal device.

With reference to the first aspect, in a possible implementation, the method further includes: receiving a second message from the STA, where the second message indicates the first AP to feed back the CSI; and feeding back the channel state information to the STA includes: feeding back the channel state information to the STA based on the second message.

In this implementation, after the first AP obtains the CSI between the first AP and the second AP through a measurement, the first AP performs feedback only after receiving the second message sent by the STA. That is, in this implementation, whether the first AP feeds back the CSI between the first AP and the second AP may be considered as being scheduled by the STA.

In this implementation, the STA schedules whether the first AP feeds back the CSI between the first AP and the second AP. Compared with a case in which the first AP actively feeds back the CSI between the first AP and the second AP, this can avoid interference of the CSI fed back by the first AP on communication between the STA and another device.

With reference to the first aspect, in a possible implementation, feeding back the channel state information to the STA includes: sending a sensing measurement report message to the STA, where the sensing measurement report message includes first information, and the first information indicates that the sensing measurement report message is a sensing measurement report message that feeds back channel state information between APs.

In a possible implementation, the sensing measurement report message is also referred to as a measurement report message, a measurement report frame, or a sensing measurement report frame, and this is not intended to limit this application.

That the first information indicates that the sensing measurement report message is a sensing measurement report message that feeds back CSI between APs also may be replaced with: The first information indicates that the sensing measurement report message is used to feed back CSI between APs.

In this implementation, when feeding back the CSI between the first AP and the second AP to the STA, the first AP feeds back the CSI by using the sensing measurement report message. Specifically, in this implementation, the sensing measurement report message sent by the first AP includes the first information, and the first information indicates that the sensing measurement report message is a sensing measurement report message that feeds back CSI between APs, so that the STA learns that a currently received sensing measurement report message is used to feed back CSI between APs. For example, during implementation, when a value of the first information in the sensing measurement report message sent by the first AP is a first bit value, it is considered that the sensing measurement report message sent by the first AP is a sensing measurement report message used to feed back CSI between APs. Otherwise (that is, the value of the first information is not the first bit value), it is considered that the sensing measurement report message sent by the first AP is not a sensing measurement report message used to feed back CSI between APs.

It should be understood that, in this implementation, efficiency of obtaining, by the STA, the CSI that is between the first AP and the second AP and that is fed back by the first AP can be improved. For example, if there are a plurality of sensing measurement report messages fed back by the first AP, and if the STA currently needs to learn that a priority of the CSI between APs is higher than a priority of the CSI that is between the STA and the AP and that is fed back by the first AP, the CSI that is between the first AP and the second AP and that is fed back by the first AP may be quickly obtained only by parsing whether a value of first information included in each sensing measurement report message is the first bit value.

With reference to the first aspect, in a possible implementation, the sensing measurement report message further includes identification information of the first AP and identification information of the second AP.

For example, the identification information of the first AP is a MAC address of the first AP, and the identification information of the second AP is a MAC address of the second AP.

In this implementation, the first AP includes the identification information of the first AP and the identification information of the second AP in the sensing measurement report message sent by the first AP, so that the STA can clearly learn that CSI indicated by the received sensing measurement report message is the CSI between the first AP and the second AP instead of CSI between the first AP and another AP.

It may be understood that, after the STA sends, to the first AP, an indication indicating the first AP to measure the CSI between the first AP and the second AP, the first AP has the following two cases: (1) The first AP can receive (which is referred to as receiving for short) the NDP sent by the second AP; (2) The first AP cannot receive (which is referred to as failing to receive for short) the NDP sent by the second AP.

Further, it may be understood that, when the first AP can receive the NDP sent by the second AP, the first AP can measure the CSI between the first AP and the second AP. However, when the first AP cannot receive the NDP sent by the second AP, a CSI measurement between the first AP and the second AP does not exist. In this embodiment of this application, when the first AP can receive the NDP sent by the second AP, the first AP includes, in the sensing measurement report message, CSI obtained through a measurement based on the NDP sent by the second AP. On the contrary, if the first AP cannot receive the NDP sent by the second AP, the first AP does not include, in the sensing measurement report message, the CSI obtained through a measurement based on the NDP sent by the second AP.

However, to enable the STA to learn whether the CSI exists in the sensing measurement report message sent by the first AP, in this embodiment of this application, when feeding back the sensing measurement report message, the first AP further includes second information in the sensing measurement report message. The second information indicates whether the CSI exists in the sensing measurement report message.

Specifically, in this embodiment of this application, when the sensing measurement report message is a sensing measurement report message that feeds back CSI between APs, if the second information indicates that the CSI does not exist in the sensing measurement report message, it is considered that the first AP notifies the STA that the first AP cannot receive the NDP sent by the second AP. Correspondingly, the STA no longer sends the first message to the first AP to indicate the first AP to measure the CSI between the first AP and the second AP. In other words, if the sensing measurement report message fed back by the first AP and received by the STA is a sensing measurement report message that feeds back the CSI between APs, but CSI does not exist in the sensing measurement report message, the STA does not ask the first AP to measure the same second AP next time.

In some embodiments, when a value of the second information in the sensing measurement report message sent by the first AP is a second bit value, it is considered that the first AP indicates to the STA that the CSI exists in the sensing measurement report message. If the value of the second information in the sensing measurement report message sent by the first AP is a third bit value, it is considered that the first AP indicates to the STA that the CSI does not exist in the sensing measurement report message. In an example, when the value of the second information is 0, it is considered that the second information indicates that the CSI exists in the sensing measurement report message; or when the value of the second information is 1, it is considered that the second information indicates that the CSI does not exist in the sensing measurement report message.

With reference to the first aspect, in a possible implementation, before receiving the first message, the method further includes: receiving a third message from the STA, where the third message includes information used to request the first AP to perform a measurement between APs.

In this implementation, before sending the first message to the first AP, the STA further sends the third message to the first AP, where the third message includes request information used to request a measurement between APs.

It should be understood that, after receiving the information used to request the first AP to perform a measurement between APs, the first AP has two cases: (1) Agreeing to perform a measurement between APs (also referred to as accepting an inter-AP measurement request); (2) Disagreeing to perform a measurement between APs (also referred to as rejecting the inter-AP measurement request).

In this embodiment of this application, after receiving the information used to request the first AP to perform a measurement between APs, the first AP feeds back, to the STA, a request indicating whether the first AP accepts a measurement between APs. Correspondingly, the STA sends the first message to the first AP only when the first AP accepts an inter-AP measurement request, to trigger the first AP to measure the CSI between the first AP and the second AP.

In a possible implementation, in this embodiment of this application, the STA may further include the identification information of the second AP in the sent third message, and the identification information of the second AP is used by the first AP to determine whether to perform a measurement between the first AP and the second AP.

It should be understood that, when the third message includes the identification information of the second AP, it is equivalent to that when requesting the first AP to measure CSI between APs, the STA further notifies that the CSI between the first AP and the second AP is requested to be measured.

In this implementation, the third message includes the identification information of the second AP, so that the STA can learn in advance whether the first AP can perform a measurement between the first AP and the second AP. This avoids a case in which the first AP cannot perform a measurement between the first AP and the second AP after the first message is sent.

With reference to the first aspect, in a possible implementation, the third message is a sensing measurement request message, and the sensing measurement request message is used by the STA to request the first AP to establish a sensing measurement session.

It should be understood that the request information used to request a measurement between APs and the identification information of the second AP are carried in the third message, so that when the first AP is requested to establish a sensing measurement session with the STA, the first AP is further requested to perform a measurement between APs and/or a measurement between the first AP and the second AP. In this manner, signaling overheads can be reduced.

With reference to the first aspect, in a possible implementation, the first message includes the identification information of the second AP, and after receiving the first message from the STA, the method further includes: sending a fourth message to the STA based on the identification information of the second AP, where the fourth message indicates that the first AP is capable of measuring the channel state information between the first AP and the second AP.

In this implementation, after receiving the first message, the first AP determines, based on the identification information of the second AP, whether the first AP can measure the CSI between the first AP and the second AP, and sends the fourth message to the STA to indicate whether the first AP can measure the CSI between the first AP and the second AP.

In other words, in this application, the fourth message may be any one of the following: indicating that the first AP can measure the CSI between the first AP and the second AP, or indicating that the first AP cannot measure the CSI between the first AP and the second AP. Alternatively, in other words, in this embodiment of this application, all messages that are sent by the first AP to the STA after the first AP receives the first message and that are used to indicate whether the first AP can measure the CSI between the first AP and the second AP are referred to as the fourth message.

With reference to the first aspect, in a possible implementation, the first message includes third information, and the third information indicates an NDP sent by the second AP.

With reference to the first aspect, in a possible implementation, the method further includes: sending fourth information to the STA, where the fourth information indicates whether the first AP has a capability of performing a measurement between APs.

In this implementation, the STA can learn in advance information about whether the first AP has a capability of performing a measurement between APs, so that the STA learns whether a step of sending the first message further needs to be performed.

According to a second aspect, this application provides a communication method, applied to a station STA. The method includes: sending a first message to a first access point AP, where the first message indicates the first AP to measure channel state information between the first AP and a second AP; and receiving the channel state information between the first AP and the second AP measured by the first AP.

With reference to the second aspect, in a possible implementation, the method further includes: sending a second message to the first AP, where the second message indicates the first AP to feed back the channel state information.

With reference to the second aspect, in a possible implementation, receiving the channel state information that is between the first AP and the second AP and that is measured by the first AP includes: receiving a sensing measurement report message sent by the first AP, where the sensing measurement report message includes first information, and the first information indicates that the sensing measurement report message is a sensing measurement report message that feeds back channel state information between APs.

With reference to the second aspect, in a possible implementation, the sensing measurement report message further includes identification information of the first AP and identification information of the second AP.

With reference to the second aspect, in a possible implementation, the sensing measurement report message further includes second information, and the second information indicates whether the channel state information exists in the measurement report message.

With reference to the second aspect, in a possible implementation, before sending the first message, the method further includes: sending a third message to the first AP, where the third message includes information used to request the first AP to perform a measurement between APs.

With reference to the second aspect, in a possible implementation, the third message further includes the identification information of the second AP, and the identification information of the second AP is used by the first AP to determine whether to perform a measurement between the first AP and the second AP.

With reference to the second aspect, in a possible implementation, the third message is a sensing measurement request message, and the sensing measurement request message is used by the STA to request the first AP to establish a sensing measurement session.

With reference to the second aspect, in a possible implementation, the first message includes the identification information of the second AP, and the method further includes: receiving a fourth message sent by the first AP, where the fourth message indicates that the first AP is capable of measuring the channel state information between the first AP and the second AP.

With reference to the second aspect, in a possible implementation, the first message includes third information, and the third information indicates an NDP sent by the second AP.

With reference to the second aspect, in a possible implementation, the method further includes: receiving fourth information sent by the first AP, where the fourth information indicates whether the first AP has a capability of performing a measurement between APs.

According to a third aspect, an embodiment of this application provides a communication apparatus, including a memory configured to perform the method according to any one of the first aspect or the possible implementations of the first aspect.

With reference to the third aspect, in a possible implementation, the communication apparatus further includes a processor, the memory is configured to store program instructions, and the processor is configured to invoke the program instructions in the memory to perform the method according to any one of the first aspect or the possible implementations of the first aspect.

According to a fourth aspect, an embodiment of this application provides a communication apparatus, including a memory configured to perform the method according to any one of the second aspect or the possible implementations of the second aspect.

With reference to the fourth aspect, in a possible implementation, the communication apparatus further includes a processor, the memory is configured to store program instructions, and the processor is configured to invoke the program instructions in the memory to perform the method according to any one of the second aspect or the possible implementations of the second aspect.

According to a fifth aspect, this application provides a communication system, including the communication apparatus according to the third aspect and the communication apparatus according to the fourth aspect.

According to a sixth aspect, this application provides a computer-readable medium. The computer-readable medium stores program code to be executed by a computer, and the program code includes instructions used to perform the method according to any one of the first aspect and the second aspect or the possible implementations of the first aspect and the second aspect.

According to a seventh aspect, this application provides a chip, including at least one processor and a communication interface. The communication interface and the at least one processor are interconnected through a line, and the at least one processor is configured to run a computer program or instructions, to perform the method according to any one of the first aspect and the second aspect or the possible implementations of the first aspect and the second aspect.

According to an eighth aspect, this application provides a computer program product. The computer program product includes computer program code, and when the computer program code is run on a computer, the computer is enabled to implement the method according to any one of the first aspect and the second aspect or the possible implementations of the first aspect and the second aspect.

For technical effect brought by any implementation of the second aspect to the eighth aspect, refer to technical effect brought by the first aspect and any possible implementation of the first aspect. Details are not described again.

### BRIEF DESCRIPTION OF DRAWINGS

FIG. 1 is a system architecture of a communication method applicable to this application according to this application;
FIG. 2 is a diagram of sensing a human body behavior according to this application;
FIG. 3 is a diagram of a non-TB-based sensing measurement procedure according to this application;
FIG. 4 is a schematic flowchart of a communication method according to an embodiment of this application;
FIG. 5 is another diagram of a communication method according to this application;
FIG. 6 is another diagram of a communication method according to this application;
FIG. 7 is a schematic flowchart of a notification method according to another embodiment of this application;
FIG. 8 is another diagram of a communication method according to this application;
FIG. 9 is a diagram of sensing by proxy according to this application;
FIG. 10 is a diagram of a communication apparatus according to another embodiment of this application; and
FIG. 11 is a diagram of a communication apparatus according to another embodiment of this application.

### DESCRIPTION OF EMBODIMENTS

First, some related content, terms, or nouns in this application are briefly described.

### 1. Basic service set (basic service set, BSS)

The BSS is a basic part of a wireless local area network (WLAN). Communication in the BSS is implemented by using an AP. The AP may manage and control a group of non-access-point STAs.

STAs do not directly communicate with each other, but communicate with the AP. The AP sends a frame (or a message) to a target STA. The AP announces its presence by broadcasting a service set identifier (service set identifier, SSID), and a device that needs to use the WLAN first sends an association request (association request) to the AP. After the AP receives the association request of the station, the AP may provide a communication service for the STA. The BSS is uniquely identified by a basic service set identifier (basic service set identifier, BSSID), and the BSSID is a MAC address of the AP in the BSS.

### 2. Extended service set (extended service set, ESS)

The ESS is created by connecting a plurality of BSSs through a distributed system (distributed system). Two or more APs are connected to a same WLAN to provide larger coverage, allowing clients (stations) to move from one AP to another AP. When signal strength of a current AP is considered weak, the station finds a new AP with a stronger signal and reassociates with the new AP. The ESS is identified by an ESSID. The ESSID is usually used as an SSID to identify a wireless network, which is a wireless network name that can be seen by a user.

### 3. Sensing technologies

A wireless sensing (WLAN sensing) technology is a radar-based sensing technology. A radar includes a transmit antenna and a receive antenna. The transmit antenna sends an electromagnetic wave, and the electromagnetic wave is reflected when reaching a target, and the reflected wave is received by the receive antenna. A radar system analyzes characteristic information of the target, such as a position, a shape, a motion characteristic, and a motion route, through signal processing based on changes of a transmitted wave and a received wave. Radar sensing has many unique advantages. For example, a radar is not affected by light, and has a capability of penetrating an obstacle, so that personal privacy can be better protected. A radar sensing range is longer, which does not cause harm to people and animals. An advantage of using the radar technology to realize sensing is mainly reflected in detection of motion. Doppler effect of a target echo is used to observe and interpret a motion status of the target, like a motion direction and speed.

The wireless sensing technology may be applied to different scenarios. For example, in sports, this technology can be used to detect motion statuses and routes of human and balls. In home environments, this technology can be used for human fall detection to prevent the elderly from falling, and can interpret motion statuses and routes of human by processing channel state information (channel state information, CSI). The wireless sensing technology makes full use of existing WLAN resources without high costs. In a future densely deployed WLAN, there are a plurality of STAs in coverage of one AP, and the AP may perform appropriate resource scheduling for each STA to improve a system throughput, robustness, and the like.

### 4. Transmit opportunity (transmit opportunity, TXOP)

The transmit opportunity is a MAC function in 802.11, and improves throughput of high-priority data by providing contention-free channel access in a period of time. It is a limited period of time during which a channel owner station has available contention-free channel access.

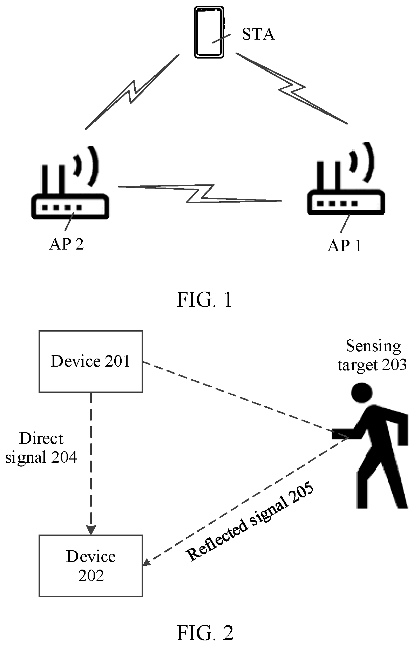

Before a communication method provided in this application is described, the following first describes, with reference to FIG. 1, a system architecture applicable to the communication method in this application.

As shown in FIG. 1, the system architecture includes two access points (access point, AP) and a non-access-point station (station, STA). The two APs are, for example, referred to as an AP 1 and an AP 2, and the STA may access the APs through a WLAN (wireless local area network, WLAN), to implement communication with another device.

It should be noted that FIG. 1 is merely an example of two APs and one STA, but a quantity of STAs and a quantity of APs do not constitute a limitation on this application. For example, the system architecture in FIG. 1 may further include more STAs and more APs.

The technical solutions in embodiments of this application may be applied to WLAN communication systems such as a sensing system, a positioning system, a ranging system, and an ultra-wideband (ultra-wideband, UWB) system. Embodiments of this application may be further applied to a device that supports an 802.11be (also referred to as EHT (extremely high throughput, extremely high throughput)) standard, a device that supports an 802.11 family WLAN standard like 802.11bn (also referred to as UHR (ultra high reliability, ultra high reliability)), or a subsequently evolved WLAN communication system.

The access point AP is an apparatus having a wireless communication function, supports communication by using a WLAN protocol, has a function of communicating with another device (for example, a station or another access point) in a WLAN network, and certainly may further have a function of communicating with another device. The AP may be an access point used by a terminal device (for example, a mobile phone) to access a wired (or wireless) network, and is mainly deployed in a home, a building, or a campus. A typical coverage radius is tens of meters to hundreds of meters. Certainly, the AP may alternatively be deployed outdoors. The access point is equivalent to a bridge that connects a wired network and a wireless network, and is mainly used to connect various wireless network clients together and then connect the wireless network to the Ethernet. Specifically, the access point may be a terminal device (like a mobile phone) or a network device (like a router) with a wireless-fidelity (wireless-fidelity, Wi-Fi) chip.

The STA is an apparatus having a wireless communication function, and may be user equipment, a subscriber unit, a subscriber station, a mobile station, a mobile console, a remote station, a remote terminal, a mobile device, a user terminal, a terminal, a wireless communication device, a user agent, or a user apparatus. The station may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

The STA in the solutions provided in embodiments of this application is a non-access-point station, namely, a non-AP STA.

In a possible implementation, the access point and the station each may be a device used in the vehicle to X, an internet of things node, a sensor, or the like in the internet of things (internet of things, IoT), a smart camera, a smart remote control, and a smart water/electricity meter in a smart home, a sensor in a smart city, or the like.

In a possible implementation, the AP may be an entire device, or may be a chip or a processing system installed in the entire device. The device in which the chip or the processing system is installed may implement the method and the function in embodiments of this application under control of the chip or the processing system. For example, the AP may be a communication entity like a communication server, a router, a switch, or a network bridge. The AP may include a macro base station, a micro base station, a relay station, and the like in various forms. Certainly, the AP may alternatively be a chip and a processing system in these devices in various forms, to implement the method and the function in embodiments of this application.

In a possible implementation, the STA may be an entire device, or may be a chip or a processing system installed in the entire device. The device in which the chip or the processing system is installed may implement the method and the function in embodiments of this application under control of the chip or the processing system.

Currently, for the system architecture shown in FIG. 1, sensing may be implemented based on channel state information (channel state information, CSI) of a channel between two devices. For example, sensing is performed on a status or behavior of a human body based on CSI of a channel between two devices.

In some embodiments, sensing may be performed based on CSI of a channel between the AP and the STA.

In some other embodiments, sensing may be performed based on CSI of a channel between STAs.

For ease of understanding, FIG. 2 is a diagram of sensing a human behavior. As shown in FIG. 2, a wireless sensing system includes a device 201 and a device 202. A signal received by the device 202 is a signal obtained by superposing a direct signal 204 and a reflected signal 205 reflected by a sensing target 203. When the sensing target 203 moves, the reflected signal 205 changes, and the signal received by the device 202 also changes accordingly. Therefore, a status of the sensing target 203 may be learned based on a change of CSI of a channel between the device 201 and the device 202.

In some embodiments, the device 201 is a STA, and the device 202 is an AP.

In some other embodiments, the device 201 is an AP, and the device 202 is a STA.

In some other embodiments, the device 201 is a STA, and the device 202 is a STA.

However, currently, when sensing is implemented based on CSI between two devices, sensing is implemented either based on CSI between an AP and a STA or based on CSI between STAs, and there is a lack of sensing methods based on CSI between APs.

In view of this, an embodiment of this application provides a method for implementing sensing based on CSI between APs.

It may be understood that when sensing implemented based on the CSI between APs provided in this application is used, accuracy of a sensing result may be further improved. For example, in many current scenarios, such as an enterprise/industrial environment, a shopping mall, and a factory, a plurality of routers (which may be considered as the APs described above) are usually installed to provide wide wireless network coverage, and locations of the routers are usually fixed. In such a scenario in which a plurality of routers are disposed, sensing may be performed based on CSI of a wireless device client (which may be considered as the STA described above) and the AP. However, when sensing is performed based on the CSI between the STA and the AP, and the STA moves, there is a problem that a sensing result of a sensing target is inaccurate. If the STA moves, it is difficult to determine whether a change of the measured CSI is caused by movement of the sensing target or movement of the STA. However, a location of the router is usually fixed. Therefore, if sensing can be performed based on CSI between APs, sensing result accuracy is improved compared with accuracy of sensing performed based on CSI between a STA and an AP.

It can be learned from the foregoing descriptions that, when sensing is implemented, CSI between two devices should be obtained. The following describes, for ease of understanding of the communication method provided in embodiments of this application, a process of measuring CSI between two devices before the communication method in this application is described. The process is usually referred to as a measurement procedure or a sensing measurement procedure.

First, when two devices perform a sensing measurement, four roles are involved.

Sensing initiator (sensing initiator): a device that initiates a sensing procedure.

Sensing responder (sensing responder): a device that participates in the sensing procedure initiated by the sensing initiator.

Sensing transmitter (sensing transmitter): a device that sends a physical layer (physical layer, PHY) protocol data unit (PHY protocol data unit, PPDU) used for a sensing measurement in a sensing process.

In some embodiments, the PPDU used for a sensing measurement is also referred to as a sensing signal, a null data physical layer protocol data unit (null data physical layer protocol data unit, NDP), or the like. The description does not constitute a limitation on this application.

Sensing receiver (sensing receiver): a device that receives the PPDU sent by the sensing transmitter and performs the sensing measurement in the sensing procedure.

Specifically, after the sensing initiator and the sensing responder are determined, a process of performing a sensing measurement between the sensing initiator and the sensing responder includes the following.
(1) The sensing initiator establishes a sensing measurement session (sensing measurement session) with the sensing responder.

In embodiments of this application, the sensing measurement session is also referred to as a measurement session.

Some parameters used for a sensing measurement may be exchanged in this phase, for example, the sensing transmitter and the sensing receiver in the sensing initiator and the sensing responder, a bandwidth of the NDP, and a time window and a periodicity used for a measurement.

It should be understood that the sensing measurement session is a protocol between two stations agreed on by one sensing initiator and one sensing responder. One sensing initiator may maintain sensing sessions with a plurality of sensing responders, but the plurality of sensing sessions still need to be set up one by one. For example, the plurality of sensing sessions may be set up simultaneously in an orthogonal frequency division multiple access (orthogonal frequency division multiple access, OFDMA) manner or a multi-user multiple-input multiple-output (multi-user multiple-input multiple-output, MU-MIMO) manner.

### (2) Sensing measurement exchange (sensing measurement exchange)

In embodiments of this application, sensing measurement exchange is also referred to as measurement exchange.

When a sensing measurement occurs, a sensing transmitter sends an NDP to a sensing receiver. Correspondingly, the sensing receiver performs a measurement based on the received NDP, to obtain CSI of a channel between a sensing initiator and a sensing responder.

It should be noted that when the sensing initiator is a device that sends the NDP, and the sensing responder is a device that receives the NDP, the sensing responder needs to feed back, to the sensing initiator, the CSI that is of the channel between the sensing initiator and the sensing responder and that is obtained through a measurement.

For example, FIG. 1 is used as an example. In an example, it is assumed that the AP 1 is a sensing initiator, the STA is a sensing responder, and a sensing measurement session is established between the AP 1 and the STA. In this case, if the AP 1 is a sensing receiver, and the STA is a sensing transmitter, the AP 1 may obtain CSI between the AP 1 and the STA through a measurement based on an NDP sent by the STA. In this scenario, there is no step of feeding back the CSI.

For example, FIG. 1 is used as an example. In an example, it is assumed that the AP 1 is a sensing initiator, the STA is a sensing responder, and a sensing measurement session is established between the AP 1 and the STA. In this case, if the AP 1 is a sensing transmitter, and the STA is a sensing receiver, after obtaining CSI between the AP 1 and the STA through a measurement based on an NDP sent by the AP 1, the STA needs to feed back the CSI to the AP 1. In this scenario, there is a step of feeding back the CSI.

For example, FIG. 1 is used as an example. In an example, it is assumed that the STA is a sensing initiator, the AP 1 is a sensing responder, and a sensing session is established between the AP 1 and the STA. In this case, if the STA is a sensing receiver, and the AP 1 is a sensing transmitter, the STA may obtain CSI between the AP 1 and the STA through a measurement based on an NDP sent by the AP 1. In this scenario, there is no step of feeding back the CSI.

For example, FIG. 1 is used as an example. In an example, it is assumed that the STA is a sensing initiator, the AP 1 is a sensing responder, and a sensing session is established between the AP 1 and the STA. In this case, if the STA is a sensing transmitter, and the AP 1 is a sensing receiver, after obtaining CSI between the AP 1 and the STA through a measurement based on an NDP sent by the STA, the AP 1 needs to feed back the CSI to the STA. In this scenario, there is a step of feeding back the CSI.

### (3) Sensing measurement session termination (sensing measurement session termination)

A sensing initiator or a sensing responder terminates a sensing measurement session.

Further, the sensing initiator determines a status/behavior of a sensing target based on measured CSI.

Specifically, in the sensing measurement procedure described above, the AP is used as a sensing initiator to initiate the sensing measurement procedure, and one or more STAs are used as sensing responders to participate in the sensing measurement procedure. This sensing measurement manner is also referred to as trigger-based (trigger-based, TB) sensing. Alternatively, the STA is used as a sensing initiator to initiate a sensing measurement procedure, and the AP is used as a sensing responder to participate in the sensing measurement procedure. The sensing measurement manner is also referred to as a non-trigger-based (non-trigger-based, non-TB) sensing measurement procedure. For the non-TB sensing measurement procedure, each non-TB sensing measurement exchange can measure only one link (a link between the STA and the AP).

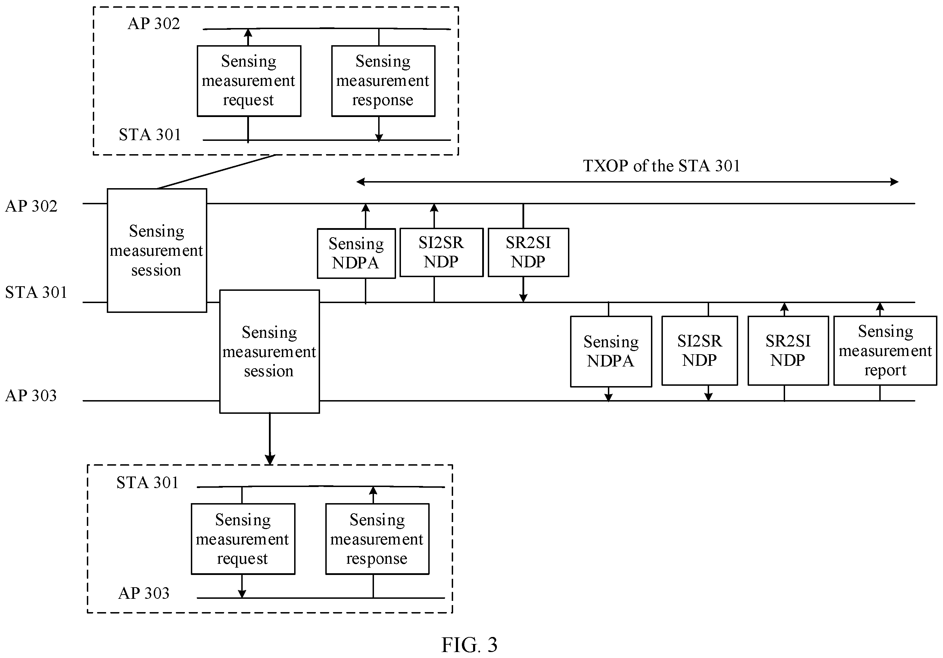

The following uses two APs as an example to describe a detailed process of the non-TB sensing measurement procedure when the STA is used as the sensing initiator with reference to FIG. 3.

As shown in FIG. 3, a STA 301 first separately performs a process of establishing a sensing measurement session with an AP 302 and an AP 303.

Specifically, in this process, the STA 301 sends a sensing measurement request (sensing measurement request) message to the AP 302 to request the AP 302 to establish a sensing measurement session. Correspondingly, the AP 302 feeds back a sensing measurement response (sensing measurement response) message to indicate that the sensing measurement request is accepted or rejected. Similarly, the STA 301 sends a sensing measurement request message to the AP 303 to request the AP 303 to establish a sensing measurement session. Correspondingly, the AP 303 feeds back a sensing measurement response message to indicate that the sensing measurement request is accepted or rejected. When the AP 302 or the AP 303 accepts the sensing measurement request from the STA, the sensing measurement session between the STA and the AP 302 or the sensing measurement session between the STA and the AP 303 is successfully established. In this example, it is assumed that both the AP 302 and the AP 303 accept the sensing measurement request, and the sensing measurement session between the STA and the AP 302 and the sensing measurement session between the STA and the AP 303 are successfully established.

Then, after the STA 301 obtains a transmit opportunity (transmit opportunity, TXOP), or in other words, the STA obtains a channel through contention, the STA may initiate a sensing measurement exchange process. In this process, a minimum program unit of non-TB sensing measurement exchange is: sensing NDP announcement (sensing NDP announcement, sensing NDPA) message-SI2SR NDP-SR2SI NDP.

The sensing NDPA message is used to notify an AP that needs to receive the NDP and other configuration information.

The SI2SR NDP is an NDP from the sensing initiator to the sensing responder (sensing initiator to sensing responder), and the SR2SI NDP is an NDP from the sensing responder to the sensing initiator (sensing responder to sensing initiator).

For example, as shown in FIG. 3, it is assumed that in a TXOP, the STA 301 first performs sensing measurement exchange with the AP 302, and then performs sensing measurement exchange with the AP 303. In this case, when the STA 301 initiates a sensing measurement exchange process to the AP 302, the STA 301 sends a sensing NDPA message to the AP 302, then sends an SI2SR NDP that follows the sensing NDPA message, and then receives an SR2SI NDP sent by the AP 302. In this embodiment, if it is assumed that the STA 301 and the AP 302 determine, in a sensing measurement session phase, that the STA 301 is a sensing receiver and the AP 302 is a sensing transmitter, a measurement occurs on the STA 301, and the STA 301 obtains a measurement result based on the SR2SI NDP sent by the AP 302.

Similarly, when the STA 301 initiates a sensing measurement exchange process to the AP 303, the STA 301 sends a sensing NDPA message and an SI2SR NDP that follows the sensing NDPA message to the AP 303, and then receives an SR2SI NDP sent by the AP 302. In this example, if it is assumed that the STA 301 and the AP 302 determine, in a sensing measurement session phase, that the STA 301 is a sensing transmitter and the AP 303 is a sensing receiver, a measurement is performed on the AP 303. The AP 303 obtains a measurement result based on the SI2SR NDP sent by the STA 301, and feeds back the measurement result to the STA 301 by using a sensing measurement report (sensing measurement report) message.

It should be noted herein that FIG. 3 is merely an example of describing a process of the sensing measurement exchange phase, where the STA 301 and the AP 302 determine, in the sensing measurement session phase, that the STA 301 is the sensing receiver and the AP 302 is the sensing transmitter, and the STA 301 and the AP 303 determine, in the sensing measurement session phase, that the STA 301 is the sensing transmitter and the AP 302 is the sensing receiver. However, this does not constitute a limitation.

For example, if it is assumed that the STA 301 and the AP 302 determine, in a sensing measurement session phase, that the STA 301 is a sensing transmitter and the AP 302 is a sensing receiver, a measurement is performed on the AP 302. The AP 302 obtains a measurement result based on an SI2SR NDP sent by the AP 302, and feeds back the measurement result to the STA 301 by using a sensing measurement report message.

For another example, if it is assumed that the STA 301 and the AP 302 determine, in a sensing measurement session phase, that the STA 301 is both a sensing transmitter and a sensing receiver, and the AP 302 is both a sensing transmitter and a sensing receiver, a measurement is performed on both the STA 301 and the AP 302. The STA 301 obtains a measurement result based on an SR2SI NDP sent by the AP 302, and the AP 302 obtains a measurement result based on an SI2SR NDP sent by the AP 302, and feeds back the measurement result to the STA 301 by using a sensing measurement report message.

In a possible implementation, the STA 301 may further maintain more sensing measurement sessions at the same time. These sensing measurement sessions may be established with a same AP, or may be established with different APs.

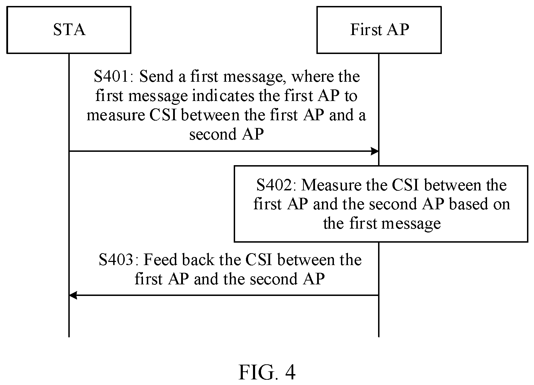

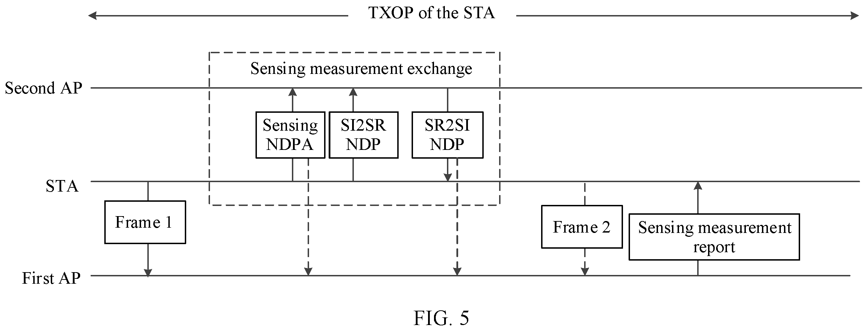

The following describes in detail, with reference to FIG. 4 and FIG. 5, a communication method that can implement sensing based on CSI between APs and that is provided in this application.

As shown in FIG. 4, the communication method includes S401, S402, and S403.

S401: A STA sends a first message to a first AP, and the first AP receives the first message, where the first message indicates the first AP to measure CSI between the first AP and a second AP.

In this embodiment, a sensing measurement session is established between the second AP and the STA, and the STA needs to perform a sensing measurement exchange procedure (as shown in FIG. 5) with the second AP, to measure the CSI between the STA and the second AP. Specifically, in this embodiment, when the STA performs the sensing measurement exchange procedure with the second AP, the STA is a sensing initiator and undertakes a role of a sensing receiver, and the second AP is a sensing responder and undertakes a role of a sensing transmitter. From another perspective, in this embodiment, when the STA performs sensing measurement exchange with the second AP, an NDP used for a measurement is the SR2SI NDP sent by the second AP, instead of the SI2SR NDP sent by the STA.

In this embodiment, before performing the sensing measurement exchange with the second AP, the STA performs an operation of sending the first message to the first AP, where the first AP is an AP different from the second AP.

For ease of description, in this embodiment of this application, the first message is represented as Frame 1.

Specifically, the Frame 1 sent by the STA to the first AP indicates the first AP to measure the CSI between the first AP and the second AP. It should be understood that the first AP needs to measure the CSI between the first AP and the second AP based on the NDP, and the second AP sends the NDP. Therefore, in this embodiment of this application, that the first message indicates the first AP to measure the CSI between the first AP and the second AP may also be replaced with: The first message indicates the first AP to measure the CSI between the first AP and the second AP based on the NDP sent by the second AP. Correspondingly, for the first AP, after receiving the first message, the first AP performs an operation of measuring the CSI between the first AP and the second AP.

More specifically, in this embodiment, the Frame 1 sent by the STA may be considered to have the following functions.
(1) The STA indicates the first AP to receive and parse a sensing NDPA message sent by the STA to the second AP. The sensing NDPA message sent by the STA to the second AP carries parameters used to parse an SI2SR NDP sent by the STA and an SR2SI NDP sent by the second AP, for example, a quantity of repetitions of an HE-LTF symbol in the NDP, and a quantity of spatial streams used to send and receive the NDP. It is noted herein that the sensing NDPA message may also be described as a sensing NDPA frame, an NDPA message, an NDPA frame, a sensing NDPA frame, or the like, and does not constitute a limitation on embodiments of this application.
   It should be understood that the sensing NDPA frame sent by the STA to the second AP is a unicast frame, and the sensing NDPA frame is sent by the STA to the second AP. Therefore, in this embodiment, a manner is that the first AP detects a channel to obtain the sensing NDPA frame sent by the STA to the second AP.
(2) The STA indicates the first AP to receive the SR2SI NDP sent by the second AP and measure the CSI between the first AP and the second AP based on the SR2SI NDP sent by the second AP, instead of measuring based on an NDP sent by another device.

For example, in an implementation solution, the Frame 1 may use a format of a control frame (control frame). The format of the control frame is shown in Table 1.

**Table 1 First message**

| Field (Field) | Description (Description) |
|---|---|
| Frame control (Frame control) | Refer to the existing protocol |
| Duration (Duration) | Refer to the existing protocol |
| Source address (receiver address, RA) | Set to a MAC address of the first AP according to the existing protocol in this embodiment |
| Target address (transmitter address, TA) | Set to a MAC address of the STA according to the existing protocol in this embodiment |
| Passive sensing control (passive sensing control) | Refer to Table 3 |
| Frame check (frame check sequence, FCS) | Refer to the existing protocol |

For concepts and detailed descriptions of the frame control, the duration, and the frame check in Table 1, refer to descriptions in the existing protocol. Details are not described herein again.

Specifically, information in the TA field in Table 1 indicates a MAC address of a transmitter that sends the Frame 1, and information in the RA field indicates a MAC address of a receiver that receives the Frame 1. In this embodiment, because the Frame 1 is sent by the STA to the first AP, the information in the TA field is a MAC address of the STA, and the information in the RA field is a MAC address of the first AP.

For example, in another implementation solution, the Frame 1 may use a format of a management frame. In this embodiment, when the first message uses the management frame, content of Frame body in the management frame corresponding to the first message is shown in Table 2.

**Table 2 Content of the Frame body in the management frame corresponding to the first message**

| Field (Field) | Description (Description) |
|---|---|
| Category (Category) | Refer to the existing protocol |
| Action/EHT action (Action/EHT Action) | Refer to the existing protocol |
| Dialog token (Dialog Token) | Refer to the existing protocol |
| Passive sensing control (passive sensing control) | Refer to Table 3 |

For more detailed descriptions of the category, the action/EHT action, and the dialog token in Table 2, refer to descriptions in the existing protocol. Details are not described herein again.

Specifically, in this embodiment, content of the passive sensing control field included in the first message shown in Table 1 and Table 2 indicates the first AP to measure the CSI between the first AP and the second AP.

For example, the content of the passive sensing control field may be shown in Table 3.

**Table 3 Content of the passive sensing control field**

| Field (Field) | Description (Description) |
|---|---|
| Sensing transmitter address (Sensing transmitter address) | MAC address of the second AP |
| NDP indication (NDP indication) | The STA notifies the first AP of an NDP used to measure CSI: |
| | 00-Reserved |
| | 01-SR2SI NDP |
| | 10-SI2SR NDP |
| | 11-SI2SR NDP and SR2SI NDP |
| Report requested (Report requested) | Feed back a result (send a sensing measurement report), or feed back no result (send no sensing measurement report) |
| Measurement session identifier (Measurement session ID) | Same as information in a same field in the sensing NDPA message |
| Measurement exchange identifier (Measurement exchange ID) | Same as information in a same field in the sensing NDPA message |

It should be understood that, when the first AP needs to measure the CSI between the first AP and the second AP based on the SR2SI NDP sent by the second AP, the first AP should first parse the sensing NDPA message sent by the STA to the second AP, because the sensing NDPA message sent by the STA to the second AP carries parameters used to parse the SI2SR NDP sent by the STA and the SR2SI NDP sent by the second AP, for example, a quantity of repetitions of an HE-LTF symbol in the NDP, and a quantity of spatial streams used to send and receive the NDP. Therefore, to enable the first AP to learn of the sensing NDPA message that needs to be parsed, in this implementation solution, when the Frame 1 is sent, the Frame 1 includes a sensing transmitter address field, where the sensing transmitter address field carries MAC address information of the second AP, or in other words, information in the sensing transmitter address field indicates the MAC address of the second AP. For example, a sensing transmitter identifier field occupies 48 bits. In this way, for the first AP, the first AP can learn, based on information carried in the sensing transmitter identifier field, that the sensing NDPA message sent by the STA to the second AP needs to be received.

It should be noted that, in this embodiment of this application, a function of including the sensing transmitter address field in the first message is to indicate the second AP. Therefore, the sensing transmitter address field may be replaced with another field, provided that information carried in the another field indicates the second AP. For example, the another field may be a sensing transmitter identifier field, and is used to carry identifier information of the second AP. In this application, a quantity of information bits occupied by an identifier of the second AP is less than a quantity of information bits occupied by the MAC address of the second AP, to reduce signaling overheads of the Frame 1. However, it should be understood that, regardless of information carried in the sensing transmitter address field or information carried in the replaced sensing transmitter identifier field, the information indicates the second AP. Therefore, in this embodiment of this application, the information carried in the sensing transmitter address field or the information carried in the sensing transmitter identifier field is also referred to as identification information of the second AP. In other words, in this embodiment of this application, the first message includes the identification information of the second AP.

An NDP indication field carries information indicating an NDP on which the first AP should perform a measurement. In other words, information in the NDP indication field indicates an NDP on which the first AP should perform a measurement.

As shown in FIG. 5, the NDP received by the first AP may further include an SI2SR NDP from the STA. However, the NDP does not include any information, and there is no sending and receiving address. Therefore, in this embodiment of this application, to enable the first AP to learn of the NDP on which a CSI measurement is based, the first AP is notified based on information carried in the NDP indication field.

In a possible implementation, the NDP indication field occupies 2 bits.

For example, as shown in Table 3, when the information carried in the NDP indication field is 01, it indicates that the first AP performs a measurement based on the NDP (SR2SI NDP) sent by the second AP; when the information carried in the NDP indication field is 10, it indicates that the first AP performs a measurement based on the NDP (SI2SR NDP) sent by the STA; when the information carried in the NDP indication field is 00, it indicates that the information carried in the NDP indication field is reserved; and when the information carried in the NDP indication field is 11, it indicates that the first AP performs a measurement based on the NDP (SR2SI NDP) sent by the second AP and performs a measurement based on the NDP (SI2SR NDP) sent by the STA.

It should be understood that, in this embodiment of this application, when the STA indicates, by using the Frame 1, the first AP to measure the CSI between the first AP and the second AP, the information in the NDP indication field may be set to 01.

A measurement session identifier field carries identification information of a sensing measurement session corresponding to a measurement of the CSI by the first AP, and the measurement exchange identifier field carries identification information of sensing measurement exchange corresponding to the measurement of the CSI by the first AP. In this embodiment of this application, information carried in the measurement session identifier field is the same as information carried in a measurement session identifier field included in the sensing NDPA message sent by the STA to the second AP (for example, the measurement session identifier field occupies 3 bits), and information carried in the measurement exchange identifier field is the same as information carried in a measurement exchange identifier field included in the NDPA sent by the STA to the second AP (for example, the measurement exchange identifier field occupies 6 bits).

In a possible implementation, the content of the passive sensing control field may further include a report requested (Report requested) field, and the report requested field carries information indicating whether the first AP feeds back the CSI obtained through a measurement. In other words, information in the report requested field indicates whether the first AP feeds back the CSI obtained through a measurement.

In a possible implementation, the report requested field occupies 1 bit. For example, in a solution, when information in the report requested field is 1, it indicates that the first AP feeds back the CSI obtained through a measurement, and when the information in the report requested field is 0, it indicates that the first AP does not feed back the CSI obtained through a measurement. For another example, in another solution, when information in the report requested field is 0, it indicates that the first AP feeds back the CSI obtained through a measurement, and when the information in the report requested field is 1, it indicates that the first AP does not feed back the CSI obtained through a measurement.

It should be understood that, in this embodiment, that the STA sends the first message to the first AP to indicate the first AP to measure the CSI between the first AP and the second AP may be considered as a passive measurement manner. A passive measurement may be understood as follows: The first AP does not participate in a sensing measurement exchange procedure initiated by the STA, but the first AP implements a CSI measurement between the first AP and the second AP by using a sensing NDPA message sent by the STA to the second AP and an SR2SI NDP sent by the second AP in sensing measurement exchange between the STA and the second AP. Therefore, in FIG. 5, a dashed line indicates that the first AP receives the sensing NDPA message and the SR2SI NDP sent by the second AP.

S402: The first AP measures the CSI between the first AP and the second AP based on the first message.

In this embodiment, after the STA sends the first message to the first AP, the first AP measures, in response to the first message, the CSI of a channel between the first AP and the second AP. Specifically, when the first AP measures the CSI between the first AP and the second AP based on the NDP sent by the second AP, the method includes: receiving, based on the first message, the sensing NDPA message sent by the STA to the second AP, receiving an NDP sent by the second AP, and obtaining the CSI between the first AP and the second AP based on the sensing NDPA message sent by the STA to the second AP and the NDP sent by the second AP.

As described in S401, the sensing NDPA message sent by the STA to the second AP includes a parameter used to parse an NDP sent by the STA and the NDP sent by the second AP. Therefore, for the first AP, if the first AP receives the NDP sent by the STA and the NDP sent by the second AP, the first AP may identify, based on the parameter that is included in the sensing NDPA message and that is used to parse the NDP sent by the STA and the NDP sent by the second AP, and a message sending sequence of non-TB sensing measurement exchange, which one is the NDP sent by the STA and which one is the NDP sent by the second AP, and then measure the CSI between the first AP and the second AP based on the NDP sent by the second AP.

S403: The first AP feeds back the CSI between the first AP and the second AP to the STA.

In this embodiment, when the first AP obtains the CSI between the first AP and the second AP based on a measurement of the NDP sent by the second AP, the first AP feeds back the CSI to the STA.

It is noted herein that a manner of triggering the first AP to feed back the CSI to the STA is not limited in this embodiment of this application.

In an implementation, after completing a measurement of the CSI between the first AP and the second AP, the first AP actively feeds back the CSI to the STA.

In another implementation, the STA sends a second message to the first AP, where the second message indicates the first AP to feed back the CSI. Correspondingly, the first AP feeds back the CSI to the STA in response to the second message. That is, in this implementation, the STA triggers the first AP to feed back the CSI.

In this embodiment of this application, for ease of description, the second message is also referred to as Frame 2.

In an implementation solution, the Frame 2 may use a format of a management frame (management frame), and a general format of the management frame is shown in Table 4.

**Table 4 General format of the management frame**

| | | | | | | | | |
|---|---|---|---|---|---|---|---|---|
| Frame control (Frame control) | Duration (Duration) | Address 1 (Address 1) | Address 2 (Address 2) | Address 3 (Address 3) | Sequence control (Sequence control) | HT control | Frame body | Frame check (frame check sequence, FCS) |
| | | | | | | HT Control | Frame Body | |

For concepts of the content in Table 4, refer to descriptions in the related technology. Details are not described herein again.

The Frame Body includes a category (Category) field, an Action/EHT Action field, and a sensing measurement report control (sensing measurement report control) field. For example, the category (Category) field occupies one byte, the Action/EHT Action field occupies one byte, and the sensing measurement report control field occupies one byte. For detailed descriptions of category (Category) information and Action/EHT Action information, refer to descriptions in a related technology. Details are not described herein again.

Specifically, in this embodiment, content of the sensing measurement report control field in the Frame Body in the Frame 2 is shown in Table 5.

**Table 5 Content of the sensing measurement report control field**

| Field (field) | Description (Description) |
|---|---|
| Sensing transmitter address (Sensing transmitter address) | Indicate a sensing transmitter corresponding to the requested CSI, namely, a MAC address of the second AP |
| NDP indication (NDP indication) | Indicate an NDP used by the first AP to measure CSI: |
| | 00-Reserved |
| | 01-SR2SI NDP |
| | 10-SI2SR NDP |
| | 11-SI2SR NDP and SR2SI NDP |
| Measurement session identifier (Measurement session ID) | Same as a same field in the sensing NDPA |
| Measurement exchange identifier (Measurement exchange ID) | Same as a same field in the sensing NDPA |

Similarly, it should be noted that, in this embodiment of this application, a function of including the sensing transmitter address field in the second message is to indicate that the sensing transmitter corresponding to the requested CSI is the second AP. Therefore, the sensing transmitter address field may also be replaced with another field, provided that information carried in the another field indicates the second AP. For example, the another field may be a sensing transmitter identifier field, and is used to carry identifier information of the second AP. However, it should be understood that, regardless of information carried in the sensing transmitter address field or information carried in the replaced another field, the information indicates the second AP.

For detailed descriptions of the NDP indication, refer to the descriptions of the related part in step S401. Details are not described herein again.

Specifically, in this embodiment, when feeding back the CSI between the first AP and the second AP to the STA, the first AP feeds back the CSI between the first AP and the second AP to the STA by sending a sensing measurement report message to the STA.

It should be understood that, when the first AP measures, in response to the first message, the CSI between the first AP and the second AP, there may be a case in which the first AP cannot receive/fails to receive (referred to as cannot receive for short) the NDP sent by the second AP. Further, it may be understood that, when the first AP cannot receive the NDP sent by the second AP, the CSI measurement between the first AP and the second AP does not exist. In this case, the first AP in this embodiment of this application still sends the sensing measurement report message, but the CSI does not exist in the sensing measurement report message. However, it should be understood that, when the CSI does not exist in the sent sensing measurement report message, it may also be considered that the first AP feeds back the CSI of the first AP and the second AP to the STA, but the fed-back CSI is non-existent CSI.

The following describes a method in which the first AP sends the sensing measurement report message to feed back the CSI between the first AP and the second AP to the STA according to an embodiment of this application.

First feedback manner: CSI is fed back based on a format of an existing sensing measurement report message.

Specifically, in an existing protocol, when CSI is fed back by using a sensing measurement report message, a measurement report container (measurement report container) field in the sensing measurement report message (also referred to as a measurement report message/measurement report frame/sensing measurement report frame) is used to carry a sensing measurement result. Specifically, content of the measurement report container field is shown in Table 6.

**Table 6 Content of the measurement report container field**

| | | | |
|---|---|---|---|
| Container length (Container Length) | Segmentation control (Segmentation Control) | Sensing measurement report control (sensing measurement report control) | Sensing measurement report (sensing measurement report) |

For example, the container length field occupies 2 bits, the segmentation control field occupies 5 bits, the sensing measurement report control field occupies 0/5/9 bits, the sensing measurement report field occupies 0 bits/x bits, and x is a positive integer greater than 0.

Content of the segmentation control field in Table 4 is used to provide control information of a measurement result. For detailed descriptions of other fields, refer to descriptions in the related technology. Details are not described herein again.

More specifically, content of the segmentation control field is shown in Table 7.

**Table 7 Content of the segmentation control field**

| Field (Field) | Description (Description) |
|---|---|
| Measurement session identifier (Measurement session ID) | Used to identify a sensing measurement session corresponding to a sensing measurement report |
| Measurement exchange identifier (Measurement exchange ID) | Used to identify sensing measurement exchange corresponding to a sensing measurement |
| Sensing transmitter STA identifier (Sensing Transmitter STA ID) | Used to identify a sensing transmitter in sensing measurement exchange corresponding to the report |
| Sensing receiver STA identifier Sensing Receiver STA ID | Used to identify a sensing receiver in the sensing measurement exchange corresponding to the report |
| Remaining report segments (Remaining Report Segments) | Indicate a remaining quantity of report segments |
| First report segment (First Report Segment) | Indicate whether a current report is a first segment or the only segment |
| Invalid indication (Invalid Indication) | Indicate whether channel state information exists in a sensing measurement report message |

For example, the measurement session identifier field occupies 3 bits, the measurement exchange identifier field occupies 6 bits, the sensing transmitter STA identifier field occupies 12 bits, the sensing receiver STA identifier field occupies 12 bits, the remaining report segments field occupies 5 bits, the first report segment field occupies 1 bit, and the invalid indication field occupies 1 bit.

In the conventional technology, for the sensing transmitter STA identifier field and the receiver STA identifier field in Table 7, generally, for a side of the STA, an association identifier (association identifier, AID) of the STA is used for identification, and 0 indicates a side of the AP, to indicate, to the STA, which two devices correspond to the CSI in the sensing measurement report message. However, in this embodiment of this application, the feedback CSI is CSI between two APs. In this case, two 0s cannot be distinguished between the two APs.

Therefore, in the first manner, when sending the sensing measurement report message, the first AP may set, to a MAC address of the second AP, information carried in the sensing transmitter STA identifier field in Table 7, and set, to a MAC address of the first AP, information carried in the receiver STA identifier field, so that the STA learns that the sensing measurement report message feeds back the CSI between the first AP and the second AP.

It should be noted that the MAC address of the first AP and the MAC address of the second AP herein may also be replaced with other identification information used to identify the first AP and the second AP, provided that the first AP and the second AP can be distinguished. For an implementation solution of being replaced with other information used to identify the first AP and the second AP, refer to descriptions in the following embodiments of this application. Details are not described herein.

In a possible implementation, in this embodiment of this application, information carried in the invalid indication field in Table 7 is also referred to as second information. In other words, the second information indicates whether channel state information exists in the sensing measurement report message.

In other words, the second information in Table 7 indicates any one of the following: the channel state information exists, or the channel state information does not exist.

It should be understood that, for the first AP in this embodiment of this application, when the first AP feeds back the CSI between the first AP and the second AP to the STA by using the sensing measurement report message, the second information may have the following two cases.
(1) If the first AP obtains the CSI between the first AP and the second AP through a measurement, the second information indicates that the CSI exists in a current measurement report container field. Correspondingly, the sensing measurement report field in Table 6 exists, that is, the CSI exists in the sensing measurement report message sent by the first AP.
(2) If the first AP cannot receive an NDP sent by the second AP, the CSI between the first AP and the second AP cannot be measured. In this case, the second information indicates that the CSI does not exist in the current measurement report container, and correspondingly, the sensing measurement report field in Table 6 does not exist. In this case, when the sensing measurement report message sent by the first AP indicates the CSI, it may be considered that the first AP notifies the STA that the first AP does not measure the CSI between the first AP and the second AP.

In a possible implementation, for the first manner, a field may be further added to Table 7. In this application, information carried in the newly added field is also referred to as first information, and the first information indicates whether the sensing measurement report message is used to feed back CSI between APs. That is, when the first AP feeds back the CSI between the first AP and the second AP by using the sensing measurement report message in the first manner, the sent sensing measurement report message further includes the first information, and the first information indicates that the sensing measurement report message is used to feed back the CSI between APs.

For example, if a value of the first information is a first bit value, it is considered that the sensing measurement report message sent by the first AP is used to feed back the CSI between APs. Otherwise (if the value of the first information is not the first bit value), it is considered that the sensing measurement report message sent by the first AP is not used to feed back the CSI between APs. It should be understood that, in this implementation, efficiency of obtaining, by the STA, the CSI that is between the first AP and the second AP and that is fed back by the first AP can be improved. For example, if there are a plurality of sensing measurement report messages fed back by the first AP, and if the STA currently needs to learn that a priority of the CSI between APs is higher than a priority of the CSI that is between the STA and the AP and that is fed back by the first AP, the CSI that is between the first AP and the second AP and that is fed back by the first AP may be quickly obtained only by parsing whether a value of first information included in each sensing measurement report message is the first bit value.

Further, if the sensing measurement report message is a sensing measurement report message that feeds back the CSI between APs, but the second information indicates that CSI does not exist in the sensing measurement report message, it is considered that the first AP notifies the STA that the first AP cannot receive the NDP sent by the second AP. Correspondingly, the STA no longer sends the first message to the first AP to indicate the first AP to measure the CSI between the first AP and the second AP. In other words, if the sensing measurement report message fed back by the first AP and received by the STA is a sensing measurement report message that feeds back the CSI between APs, but CSI does not exist in the sensing measurement report message, the STA does not ask the first AP to measure the same second AP next time.

Manner 2: An existing format of the sensing measurement report message is improved.

Specifically, identification information of a device that sends an NDP and identification information of a device that receives the NDP are added to the content of the sensing measurement report container field shown in Table 6, as shown in Table 8.

**Table 8 Content of the measurement report container field**

| | | | | |
|---|---|---|---|---|
| Container length (Container Length) | Segmentation control (Segmentation Control) | Identification information of the device that sends the NDP and the identification information of the device that receives the NDP | Sensing measurement report control (sensing measurement report control) | Sensing measurement report (sensing measurement report) |

Specifically, for the first AP in this embodiment of this application, after the CSI between the first AP and the second AP is obtained through a measurement, when the first AP sends the sensing measurement report message to the STA, an identifier of the device that sends the NDP in Table 6 included in the sensing measurement report message is an identifier of the second AP, and an identifier of the device that receives the NDP is an identifier of the first AP, to indicate, to the STA, that the first AP feeds back CSI obtained by measuring the NDP sent by the second AP.

In a possible implementation, the identification information of the device that sends the NDP is a MAC address of the device that sends the NDP, and the identification information of the device that receives the NDP is a MAC address of the device that receives the NDP. For example, the identifier of the device that sends the NDP and the identifier of the device that receives the NDP may use a format in Table 9.

**Table 9 Format of the identification information of the device that sends the NDP and the identification information of the device that receives the NDP**

| Identifier of the device that sends the NDP | Identifier of the device that receives the NDP |
|---|---|
| 48 bits or 32 bits | 48 bits or 32 bits |

Because each complete MAC address has six bytes, two addresses have 12 bytes in total. In an implementation, the MAC address may be indicated by a compressed BSSID (which already exists in an existing protocol). Each compressed BSSID has four bytes. Therefore, two addresses have eight bytes in total.

In addition, content of the segmentation control in Table 6 is modified. Modified content is shown in Table 10, where content in bold is content that needs to be modified.

**Table 10 Modified content of the segmentation control field**

| Field (field) | Description (Description) |
|---|---|
| Passive sensing report indication (optional) (Passive sensing report indication) | Indicate whether CSI in the sensing measurement report message is obtained by the first AP through non-TB sensing measurement exchange with the STA or is obtained by passively performing non-TB sensing measurement exchange based on the STA and another AP |
| Sensing indication between APs (multi-AP sensing indication) | Indicate whether the sensing measurement report message is used to feed back channel state information between APs |
| Measurement session identifier (Measurement session ID) | Used to identify a sensing measurement session corresponding to a sensing measurement report |
| Measurement exchange identifier (Measurement exchange ID) | Used to identify sensing measurement exchange corresponding to a sensing measurement |
| Sensing transmitter STA identifier (Sensing Transmitter STA ID) | Set to a reserved value |
| Sensing receiver STA identifier (Sensing Receiver STA ID) | Set to a reserved value |
| Remaining report segments (Remaining Report Segments) | Indicate a remaining quantity of report segments |
| First report segment (First Report Segment) | Indicate whether a current report is a first segment or the only segment |
| Invalid indication (Invalid Indication) | Indicate whether channel state information exists in a sensing measurement report message |

Specifically, information carried in the passive sensing report indication field indicates whether the CSI in the sensing measurement report message is obtained by the first AP by performing non-TB sensing measurement exchange with the STA in the conventional technology, or is obtained by passively performing non-TB sensing measurement exchange based on the STA and another AP. In other words, a function of the newly added passive sensing report indication field in the sensing measurement report message is to notify whether a currently sent sensing measurement report message is a non-TB sensing measurement report message in the conventional technology or a sensing measurement report message of CSI obtained through a passive measurement.

For example, the passive sensing report indication field occupies, for example, 1 bit.

For example, in an implementation, when a value of the 1 bit is 1, it indicates that the sensing measurement report message is a measurement report message of CSI obtained through a passive measurement. Otherwise, it indicates that the sensing measurement report message is a non-TB sensing measurement report message in the conventional technology.

It may be understood that, in this embodiment, when the first AP feeds back the CSI between the first AP and the second AP by using the sensing measurement report message in the second manner, the information in the passive sensing report indication field indicates that the sensing measurement report message is not a non-TB sensing measurement report message in the conventional technology, but a sensing measurement report message of CSI obtained through a passive measurement.

Specifically, information carried in the sensing indication field between APs indicates whether the measurement report message is used to feed back CSI between APs. In this embodiment of this application, the information carried in the sensing indication field between APs is also referred to as first information. In other words, a function of the first information in the sensing measurement report message is to feed back, to the STA, whether the sensing measurement report message is a measurement report message for feeding back the CSI between APs.

For example, the sensing indication field between APs occupies 1 bit. For example, in an implementation, when a value of the 1 bit is 1, it indicates that the sensing measurement report message is a sensing measurement report message for feeding back CSI between two APs. Otherwise, it indicates that the sensing measurement report message is not a sensing measurement report message for feeding back CSI between two APs. For another example, in another implementation, when a value of the 1 bit is 0, it indicates that the sensing measurement report message is a sensing measurement report message for feeding back CSI between two APs. Otherwise, it indicates that the sensing measurement report message is not a sensing measurement report message for feeding back CSI between two APs.

It may be understood that, in this embodiment, when the first AP feeds back the CSI between the first AP and the second AP by using the sensing measurement report message in the second manner, the first information indicates that the sensing measurement report message is a sensing measurement report message for feeding back CSI between APs.

In a possible implementation, when the first AP sends the sensing measurement report message, the identification information of the device that sends the NDP and the identification information of the device that receives the NDP in Table 8 exist only when the first information indicates that the sensing measurement report message is a sensing measurement report message for feeding back CSI between APs, that is, only when the first information indicates that the sensing measurement report message is used to feed back the CSI between APs. Otherwise, the identification information of the device that sends the NDP and the identification information of the device that receives the NDP in Table 8 do not exist.

In this embodiment of this application, when the first AP feeds back the CSI between the first AP and the second AP by using the sensing measurement report message in the second manner, information carried in the sensing transmitter STA identifier field and information carried in the sensing receiver STA identifier field in Table 10 in the sensing measurement report message are both set to a reserved value, that is, a transmitter and a receiver corresponding to the CSI are not indicated by the two fields, but are indicated by using the identification information of the device that sends the NDP and the identification information of the device that receives the NDP that are included in the sensing measurement report message in Table 8.

Same as the invalid indication field in Table 2, information in the invalid indication field is also referred to as second information. Specifically, in this embodiment of this application, when the sensing measurement report message in the second manner is used, if the sensing measurement report message is a sensing measurement report message for feeding back CSI between APs, but the second information indicates that the CSI does not exist in the sensing measurement report message, it is considered that the first AP notifies the STA that the first AP cannot receive an NDP sent by the second AP. Correspondingly, the STA no longer sends the first message to the first AP to indicate the first AP to measure the CSI between the first AP and the second AP. In other words, if the sensing measurement report message fed back by the first AP and received by the STA is a sensing measurement report message that feeds back the CSI between APs, but CSI does not exist in the sensing measurement report message, the STA does not ask the first AP to measure the same second AP next time. It can be learned that, in this embodiment of this application, the STA sends, to the first AP, the first message indicating the first AP to measure the CSI between the first AP and the second AP, to trigger the first AP to measure the CSI between the first AP and the second AP based on the NDP sent by the second AP. In other words, the STA sends the first message to the first AP, to trigger a CSI measurement between APs.

Further, after the CSI between the first AP and the second AP is obtained, sensing of a sensing target may be implemented based on the CSI between the first AP and the second AP (that is, sensing is performed based on the CSI between APs).

In addition, it may be understood that, when sensing is implemented based on the CSI between APs, accuracy of the sensing may be improved in some scenarios. For example, in an environment in which a plurality of routers (which may be considered as APs) and terminal devices (which may be considered as STAs) are deployed, when sensing is performed based on CSI between the routers and the terminal devices, if the terminal device moves, it is difficult to determine whether a change of the CSI is caused by movement of a sensing target or movement of the terminal device, and consequently, a sensing result is inaccurate. However, if the method for performing sensing based on CSI between APs provided in this application is used, because a location of the router is usually unchanged, accuracy of sensing can be improved compared with a manner of performing sensing based on CSI between the router and the terminal device.

It may be understood that the first AP can implement the method in this application only when the first AP has a function of performing a measurement between APs. Therefore, in a possible implementation, in this embodiment of this application, the STA performs a step of sending the first message to the second AP only when the first AP has the capability of performing a measurement between APs.

In an implementation, the first AP may send, to the STA, fourth information indicating whether the first AP has the capability of performing a measurement between APs, so that the STA learns whether the first AP has the capability of performing a measurement between APs. For example, when a value of the fourth information is 1, it indicates that the first AP has the capability of performing a measurement between APs. When a value of the fourth information is 0, it indicates that the first AP does not have the capability of performing a measurement between APs.

In a possible implementation, the fourth information may also be referred to as multi-AP passive sounding support (multi-AP passive sounding support) information.

In a possible implementation, the fourth information may be carried in an element indicating sensing capability information: sensing capabilities element (sensing capabilities element) information in the 11bf protocol. For example, one reserved bit (for example, B71) in the sensing capabilities element information is used as the fourth information to indicate whether the foregoing function is supported. It should be noted that, in a scenario in which the sensing capability information is modified, for another device that sends the sensing capabilities element information, if the another device that sends the sensing capability information is a STA, the STA may set B71 to a reserved setting, to indicate that B71 is meaningless.

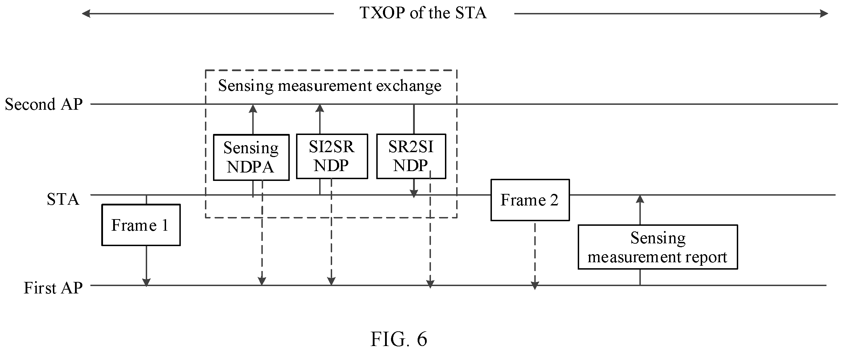

In a possible implementation, in this embodiment of this application, when triggering, by using the first message, the first AP to measure the CSI between the first AP and the second AP based on the NDP sent by the second AP, the STA may further indicate the first AP to measure the CSI between the first AP and the STA based on the NDP sent by the STA. For example, in an implementation, the STA may set, to 11, the NDP indication information included in Frame 1 in Table 3. Correspondingly, for the first AP, refer to FIG. 6. The first AP performs a measurement by using an NDP sent by the STA and performs a measurement by using the NDP sent by the second AP. Further, the first AP may feed back, to the STA, both results corresponding to the two NDPs.

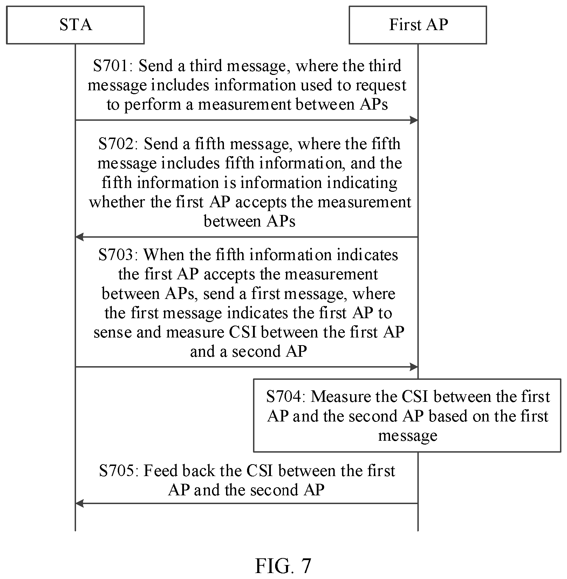

With reference to FIG. 7, another embodiment of a method for implementing a measurement between APs provided in this application is described. As shown in FIG. 7, the method includes the following steps.

S701: A STA sends a third message to a first AP, and the first AP receives the third message, where the third message includes information used to request to perform a measurement between APs.

A function of the third message is not limited in this embodiment. Provided that a message sent by the STA carries information used to request the first AP to perform a measurement between APs, the message may be considered as the third message described herein.

In a possible implementation, in this embodiment of this application, the information that is included in the third message and that is used to request to perform a measurement between APs is also referred to as multi-AP passive sensing request (multi-AP passive sensing request) information.

In some embodiments, the third message is a sensing measurement request message (also referred to as a sensing measurement request frame), and the sensing measurement request message is used by the STA to request the first AP to establish a sensing measurement session. In other words, when the STA requests, by using the sensing measurement request message, the first AP to establish the sensing measurement session, new information is further added to the sensing measurement request message, and the new information is used to request the first AP to perform a measurement between APs.

For example, the sensing measurement request message is a sensing measurement request message shown in Table 11, and an implementation of requesting to perform a measurement between APs is described as an example.

**Table 11 Sensing measurement request message**

| | | | | | |
|---|---|---|---|---|---|
| Category (Category) | Public action/Protected dual of public action (Public Action/Protected Dual of Public Action) | Dialog token (Dialog Token) | Sensing comeback information (Sensing Comeback Info) | Measurement session identifier indication (Measurement Session ID Indication) | Sensing measurement parameters element (Sensing Measurement Paremeters element) |

For example, the category (Category) information, the public action/protected dual of public action information, the dialog token information, the sensing comeback info information, and the measurement session ID indication information each occupy one byte, and the sensing measurement parameters element information occupies 0 or a valid byte. The valid byte may be understood as a byte that is occupied but a specific quantity of occupied bytes is not limited.

The sensing measurement parameters element information in Table 11 includes sensing specific subelement information. Specifically, content included in the sensing specific subelement information is shown in Table 12.

**Table 12 Sensing specific subelement information**

| | | | |
|---|---|---|---|
| Subelement identifier (Subelement ID) | Length (Length) | Minimum measurement interval (Min Time Between Measurements) | Reserved (Reserved) |

The subelement ID information occupies bits 0 to 7 (B0 to B7), the length information occupies B8 to B15, the min time between measurements information occupies B16 to B38, and the reserved information occupies B39 to B47. During implementation, for example, B39 may be used as the multi-AP passive sensing request information.

In a possible implementation, when B39 is 1, it indicates that the information is further used to request to perform a measurement between APs.

S702: The first AP sends a fifth message to the STA in response to the third message, where the fifth message includes information indicating whether the first AP accepts the measurement between APs.

In this embodiment, after receiving the information used to request to perform a measurement between APs, the second AP determines whether to accept the request and feeds back the request to the STA.

A function of the fifth message is not limited in this embodiment. Provided that a message sent by the first AP carries the information indicating whether the first AP accepts the measurement between APs, the message may be considered as the fifth message described herein.

For example, the fifth message is a sensing measurement response message (also referred to as a sensing measurement response frame).

In this embodiment, the information that is carried in the fifth message and that indicates whether the first AP accepts the measurement between APs is also referred to as fifth information. That is, the fifth information may be considered as a status code, and the status code is carried in a field in the fifth message.

In a possible implementation, in this embodiment, information carried in a status code field in the fifth message may be invalid AP (INVALID_AP) indication information, and the INVALID_AP indication information itself indicates a reason for rejecting a request for measuring CSI between the first AP and the second AP. For the first AP, the second AP is an invalid AP, and a possible reason is that the first AP and the second AP are not within a coverage of a received signal of each other. In other words, in this embodiment of this application, when the first AP sends the fifth message to the STA, if the fifth information included in the fifth message is the INVALID_AP indication information, it may be considered that when indicating that the request for measuring the CSI between the first AP and the second AP is rejected, the INVALID_AP indication information further indicates that the first AP sends the rejection because the first AP cannot receive an NDP sent by the second AP.

S703: When the first AP accepts the measurement between APs, the STA sends a first message to the first AP, where the first message indicates the first AP to sense and measure the CSI between the first AP and the second AP.

S704: The first AP measures the CSI between the first AP and the second AP based on the first message.

S705: The first AP feeds back the CSI between the first AP and the second AP.

Specifically, for sending, by the STA, the first message to the first AP in S703, refer to the description in S401 in the embodiment in FIG. 4. For S704, refer to S402 in the embodiment in FIG. 4. For S705, refer to the description in S403 in the embodiment in FIG. 4. Details are not described herein again.

According to the communication method provided in this embodiment, the STA triggers the first AP to measure the CSI between the first AP and the second AP only when the first AP accepts the measurement between APs.

It may be understood that, for the embodiment shown in FIG. 7, when the first AP determines whether to accept the measurement between APs, even if the first AP determines to accept the measurement between APs, it does not mean that the first AP can perform a measurement between the first AP and the second AP. For example, after the first AP determines to accept the measurement between APs, when the first AP measures the CSI between the first AP and the second AP based on the first message, the first AP may still not receive the NDP sent by the second AP. In this case, the first AP cannot measure the CSI between the first AP and the second AP based on the NDP sent by the second AP. Therefore, in a possible implementation, in S701, when sending the third message, the STA not only includes, in the third message, the information used to request to perform a measurement between APs, but also includes identification information of the second AP in the third message, to notify, when requesting the first AP to perform the measurement between APs, that the first AP measures the CSI between the first AP and the second AP.

For example, the identification information of the second AP is a MAC address of the second AP. In an implementation, as shown in Table 13, the MAC address of the second AP may be added to content included in a sensing specific subelement.

**Table 13 Content of the sensing specific subelement**

| | | | | |
|---|---|---|---|---|
| Subelement identifier (Subelement ID) | Length (Length) | Minimum measurement interval (Min Time Between Measurements) | Multi-AP passive sensing request (multi-AP passive sensing request) | MAC address of the second AP (Sensing transmitter address) |

The subelement ID information occupies bits 0 to 7 (B0 to B7), the length information occupies B8 to B15, the min time between measurements information occupies B16 to B38, the multi-AP passive sensing request information occupies B39, and the MAC address information of the second AP occupies B40 to B48.

In a possible implementation, the MAC address of the second AP exists only when the multi-AP passive sensing request information requests to perform a measurement between APs; otherwise, the MAC address of the second AP does not exist.

Correspondingly, for the first AP, the first AP determines, based on an identifier of the second AP, that the STA requests the first AP to measure the CSI between the first AP and the second AP, and then the fifth message sent to the STA in response to the third message includes information indicating whether to perform a measurement between the first AP and the second AP. Further, for the STA, the STA sends the first message to the first AP only when the first AP accepts the measurement between the first AP and the second AP.

It should be understood that, an operation of including the identification information of the second AP in the third message may enable the STA to learn in advance whether the first AP can perform a sensing measurement between the first AP and the second AP. This avoids a case in which the first AP cannot perform a sensing measurement between the first AP and the second AP after the first message is sent.

In a possible implementation, in this embodiment of this application, when the STA sends the first message to the first AP, the first message further includes a parameter used by the first AP to perform a measurement and/or feed back CSI. In this embodiment of this application, the parameter used by the first AP to perform a measurement and/or feed back CSI is also referred to as a measurement parameter.

For example, in a scenario in which no measurement session is established between the first AP and the STA, if the STA wants to trigger the first AP to measure the CSI between the first AP and the second AP, when the STA sends the first message to the first AP, the first message further includes a sensing measurement parameter.

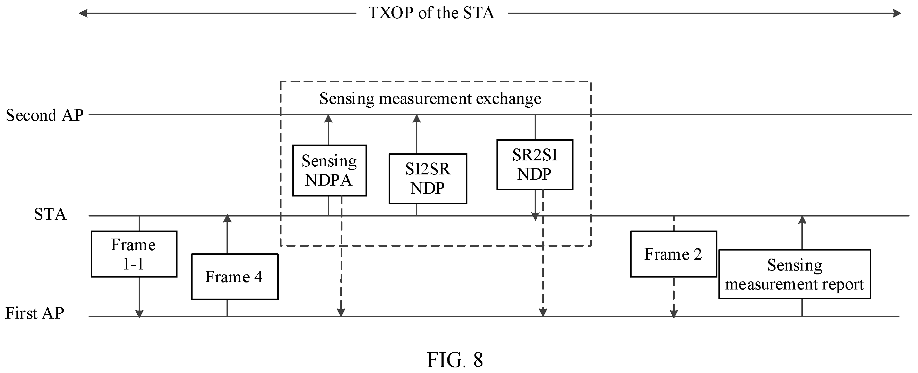

For ease of description, in this embodiment of this application, the first message that includes the parameter used by the first AP to perform a measurement and/or feed back CSI is also represented as a Frame 1-1 (as shown in FIG. 8).

For example, during implementation, as shown in Table 14, a sensing measurement parameters element field may be added to the Frame body in the management frame corresponding to the first message shown in Table 2.

**Table 14**

| Field (Field) | Description (Description) |
|---|---|
| Category (Category) | Refer to the existing protocol |
| Action/EHT action (Action/EHT Action) | Refer to the existing protocol |
| Dialog token (Dialog Token) | Refer to the existing protocol |
| Passive sensing control (passive sensing control) | Refer to Table 3 |
| Sensing measurement parameters element | Reuse the sensing measurement parameters element (sensing measurement parameters element) in the existing protocol |

Information carried in the sensing measurement parameters element field is a sensing measurement parameter in this embodiment, the sensing measurement parameters element reuses the sensing measurement parameters element (sensing measurement parameters element) field in the existing protocol.

Correspondingly, after the sensing measurement parameters element field is added, as shown in Table 15, content of passive sensing control information included in the first message further includes a sensing measurement parameter existence field, and information carried in the sensing measurement parameter existence field indicates whether the first message includes a sensing measurement parameter used by the first AP to perform a measurement and/or feed back CSI.

**Table 15 Content of the passive sensing control field**

| Field (Field) | Description (Description) |
|---|---|
| Sensing transmitter address (Sensing transmitter address) | MAC address of the second AP |
| NDP indication (NDP indication) | Indicate an NDP used by the first AP to measure CSI: |
| | 00-Reserved |
| | 01-SR2SI NDP |
| | 10-SI2SR NDP |
| | 11-SI2SR NDP and SR2SI NDP |
| Report requested (Report requested) | Feed back a result (send a sensing measurement report), or feed back no result (send no sensing measurement report) |
| Measurement session identifier (Measurement session ID) | Same as a same field in the sensing NDPA |
| Measurement exchange identifier (Measurement exchange ID) | Same as a same field in the sensing NDPA |
| Sensing measurement parameter existence | Indicate whether the first message includes the sensing measurement parameter used by the first AP to perform a measurement and/or feed back CSI |

For example, if information in the sensing measurement parameter existence field is set to 1, it indicates that the first message includes a sensing measurement parameters element field used by the first AP to perform a measurement and feedback. If a value of the information in the sensing measurement parameter existence field is set to 0, it indicates that the first message does not include the sensing measurement parameters element field used by the first AP to perform a measurement and feedback. The first AP performs a measurement and feedback according to an implementation of the first AP (network synchronization may be performed between the first AP and the STA, or the implementation may be defaulted in advance).

Same as Table 3, the MAC address of the second AP is merely an example of the identifier of the second AP, and does not constitute a limitation on this application.

In this embodiment of this application, as shown in FIG. 8, after the STA sends the Frame 1-1 (the first message), the first AP may further determine, based on the identifier of the second AP carried in the Frame 1-1, whether to perform a measurement between the first AP and the second AP, and feed back a fourth message to the STA, where the fourth message indicates, to the STA, whether to accept a request for measuring the CSI between the first AP and the second AP.

In a possible implementation, when the first AP adds the sensing measurement parameters element field to the first message, the first AP determines, based on the identifier of the second AP carried in the first message, whether to perform a measurement between the first AP and the second AP, and feeds back the fourth message to the STA.

In other words, the fourth message indicates any one of the following: The first AP can measure the CSI between the first AP and the second AP, or the first AP cannot measure the CSI between the first AP and the second AP.

That is, in this embodiment of this application, the fourth message indicates any one of the following: The first AP accepts the request for measuring the CSI between the first AP and the second AP, or the first AP rejects the request for measuring the CSI between the first AP and the second AP.

Correspondingly, when the fourth message sent by the first AP indicates that the CSI between the first AP and the second AP can be measured, the first AP in this embodiment measures the CSI between the first AP and the second AP based on the NDP sent by the second AP.

For ease of description, the fourth message is also referred to as Frame 4.

For example, during implementation, the fourth message sent by the first AP is shown in Table 16.

**Table 16 Fourth message**

| Field (Field) | Description (Description) |
|---|---|
| Category (Category) | Refer to the existing protocol |
| Action/EHT action (Action/EHT Action) | Refer to the existing protocol |
| Dialog token (Dialog Token) | Refer to the existing protocol |
| Status code (Status Code) | Indicate whether the first AP accepts a request for measuring CSI between the first AP and the second AP |
| Passive sensing control (passive sensing control) | Same as Table 5 |
| Sensing measurement parameters element | Reuse the sensing measurement parameters element (sensing measurement parameters element) in the existing protocol |

As shown in Table 13, information carried in the status code field indicates whether the first AP accepts the request for measuring CSI between the first AP and the second AP.

In a possible implementation, in an implementation solution, the information in the status code field in this embodiment of this application may be invalid AP (INVALID_AP) indication information, where the INVALID_AP indication information itself indicates a reason for rejecting a request for measuring CSI between the first AP and the second AP. For the first AP, the second AP is an invalid AP, and a possible reason is that the first AP and the second AP are not within a coverage of a received signal of each other.

In other words, in this embodiment of this application, when the first AP sends the fourth message to the STA, if the status code included in the fourth message is INVALID_AP, it may be considered that when indicating that the request for measuring the CSI between the first AP and the second AP is rejected, the INVALID_AP further indicates that the first AP sends the rejection because the first AP cannot receive the NDP sent by the second AP.

It can be learned that, in the embodiment shown in FIG. 8, compared with the embodiment shown in FIG. 4, the CSI measurement between the first AP and the second AP can be implemented without establishing a measurement session between the first AP and the STA. In addition, according to the method in the embodiment shown in FIG. 8, before the STA performs measurement exchange with the second AP, the STA may be notified whether the first AP can measure CSI between the first AP and the second AP.

It should be noted that, in the foregoing embodiment of this application, when the first AP feeds back the sensing measurement report message to the STA, to enable the STA to learn that the first AP feeds back the CSI between the first AP and the second AP, regardless of whether the first AP feeds back the CSI based on a format of the existing sensing measurement report message or the first AP feeds back the CSI based on a format obtained by improving the format of the existing sensing measurement report message, an example in which the sensing measurement report message includes a MAC address of the first AP and a MAC address of the second AP is used for description. However, generally, overheads of a MAC address are large. For example, each complete MAC address requires six bytes. Therefore, this application further describes several solutions, so that when the second AP feeds back the CSI by using the sensing measurement report message, overheads of the sensing measurement report message sent by the second AP can be reduced while it is indicated that the fed-back CSI is the CSI between the first AP and the second AP.

In the first implementation solution, if the STA performs an operation of sending the third message to the first AP in the embodiment shown in FIG. 7, but the third message includes only one bit of passive sensing request information, and does not include the MAC address of the second AP, in this case, when sending the first message in the embodiment shown in FIG. 4 to the first AP, the STA may further include the identifier of the second AP and the identifier of the first AP in the first message. The identifier of the first AP indicates the first AP, and a quantity of information bits occupied by the identifier of the first AP is less than a quantity of information bits occupied by the MAC address of the first AP. The identifier of the second AP and the MAC address of the second AP both indicate the second AP, and a quantity of information bits occupied by the identifier of the second AP is less than a quantity of information bits occupied by the MAC address of the second AP. For example, the identifier of the second AP may be added to the passive sensing control field included in the first message shown in FIG. 4, as shown in Table 17.

**Table 17 Content of the passive sensing control field**

| Field (Field) | Description (Description) |
|---|---|
| Sensing transmitter address (Sensing transmitter address) | MAC address of the second AP |
| Sensing transmitter identifier (Sensing transmitter ID) | Identifier of the second AP |
| Sensing receiver identifier (Sensing receiver ID) | Identifier of the first AP |
| NDP indication (NDP indication) | The STA notifies the first AP of an NDP used to measure CSI: |
| | 00-Reserved |
| | 01-SR2SI NDP |
| | 10-SI2SR NDP |
| | 11-SI2SR NDP and SR2SI NDP |
| Report requested (Report requested) | Feed back a result (send a sensing measurement report), or feed back no result (send no sensing measurement report) |
| Measurement session identifier (Measurement session ID) | Same as information in a same field in the sensing NDPA message |
| Measurement exchange identifier (Measurement exchange ID) | Same as information in a same field in the sensing NDPA message |

Similarly, for the first AP, the identifier of the first AP and the identifier of the second AP are learned based on the first message, and when the sensing measurement report is fed back to the STA, the MAC address of the first AP and the MAC address of the second AP may not indicate that the fed-back CSI is the CSI between the first AP and the second AP, but the MAC address of the first AP is replaced with the identifier of the first AP, and the MAC address of the second AP is replaced with the identifier of the second AP. For example, the first AP may set information in the sensing transmitter STA identifier field in Table 7 to the identifier of the second AP and set information in the sensing receiver STA identifier field to the identifier of the first AP when feeding back the CSI based on the format of the existing sensing measurement report message described in the embodiment shown in FIG. 4. Alternatively, the first AP may set information in an identifier field of the device that sends the NDP in Table 9 to the identifier of the second AP, and set information in an identifier field of the device that receives the NDP to the identifier of the first AP when feeding back the CSI in a manner of improving the format of the existing sensing measurement report message based on the embodiment shown in FIG. 4.

In a second implementation solution, if the STA performs an operation of sending the third message to the first AP in the embodiment shown in FIG. 7, and the third message includes the MAC address of the second AP, as shown in Table 18, the STA may further include, in the third message, the identifier allocated to the second AP, and include, in the third message, the identifier allocated to the first AP.

**Table 18 Content included in the third message**

| | | | | | | |
|---|---|---|---|---|---|---|
| Subelement identifier (Subelement ID) | Length (Length) | Minimum measurement interval (Min Time Between Measurements) | Multi-AP passive sensing request (multi-AP passive sensing request) | Identifier of the first AP (Sensing receiver ID) | MAC address of the second AP (Sensing transmitter address) | Identifier of the second AP (Sensing transmitter ID) |

For descriptions of the subelement identifier, the length, the minimum measurement interval, and the multi-AP passive sensing request, refer to related descriptions in the foregoing embodiment. Details are not described herein again.

The identifier of the second AP of the identifier of the first AP are both 0/y bits, where y is less than a quantity of bits included in the MAC address. For example, y is set to 11, 12, or 16.

Correspondingly, for the first AP, the identifier of the first AP and the identifier of the second AP are learned based on the third message, and when the sensing measurement report message is fed back to the STA, the MAC address of the first AP and the MAC address of the second AP may not indicate that the fed-back CSI is the CSI between the first AP and the second AP, but the MAC address of the first AP is replaced with the identifier of the first AP, and the MAC address of the second AP is replaced with the identifier of the second AP. For example, the first AP may set information in the sensing transmitter STA identifier field in Table 7 to the identifier of the second AP and set information in the sensing receiver STA identifier field to the identifier of the first AP when feeding back the CSI based on the format of the existing sensing measurement report message described in the embodiment shown in FIG. 4. Alternatively, the first AP may set information in an identifier field of the device that sends the NDP in Table 9 to the identifier of the second AP, and set information in an identifier field of the device that receives the NDP to the identifier of the first AP when feeding back the CSI in a manner of improving the format of the existing sensing measurement report message based on the embodiment shown in FIG. 4. In this way, overheads of the sensing measurement report message sent by the second AP are reduced while it is indicated that the fed-back CSI is the CSI between the first AP and the second AP.

In a possible implementation, in the second implementation solution, when sending the first message to the first AP, the STA may set information in the sensing transmitter address field in Table 3 included in the first message to the identifier of the second AP in the third message, thereby reducing overheads of the first message.

In a third implementation solution, if the STA performs an operation of sending the Frame 1-1 to the first AP, a sensing transmitter identifier (Sensing Transmitter ID) field and a sensing receiver identifier (sensing receiver ID) field may be added to the content included in the passive sensing control field in Table 15 included in the Frame 1-1. The sensing transmitter identifier field carries the identifier of the second AP, and the sensing receiver identifier carries the identifier of the first AP.

It should be noted that, in this embodiment of this application, the identifier of the first AP and the identifier of the second AP are temporarily allocated by the STA, are mainly used to identify the first AP and the second AP when the first AP feeds back a sensing measurement report, and reduce overheads of the sensing measurement report message sent by the first AP. If the identifier of the first AP and the identifier of the second AP are allocated in a sensing measurement session process (that is, allocated by using the third message), a validity period of the identifier is the same as a validity period of a sensing measurement session by default. If the identifier of the first AP and the identifier of the second AP are allocated in a manner of the Frame 1-1, the identifier is valid only for a current sensing measurement. The STA determines how to generate the identifier of the first AP and the identifier of the second AP, and the STA needs to allocate at least one different identifier to different APs. To achieve better protocol compatibility, 11 bits, 12 bits, or 16 bits may be considered.

The following describes another communication method that can be used to implement a measurement between APs and that is provided in this application.

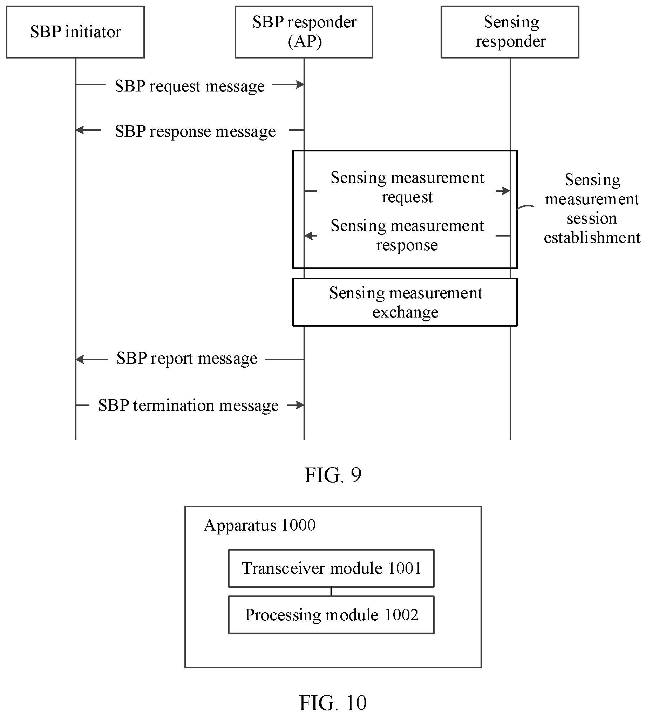

Specifically, before the communication method for implementing a measurement between APs is described, sensing by proxy (sensing by proxy, SBP) is described with reference to FIG. 9.

Specifically, as shown in FIG. 9, in a proxy sensing measurement, an SBP initiator (or referred to as an SBP request station) sends an SBP request message to an AP (also referred to as an SBP responder or a proxy AP), to request the proxy AP to perform a sensing measurement as a proxy of the SBP initiator. The SBP request message includes a list of sensing responders that need to be measured by the proxy AP as a proxy. Correspondingly, the proxy AP replies with an SBP response message to indicate that the proxy AP receives or rejects an SBP request. After the proxy AP receives the SBP request, the proxy AP and the sensing responder separately establish a sensing measurement session, and the proxy AP may establish a sensing measurement session with a sensing responder in the list provided by the SBP initiator and perform sensing measurement exchange. For detailed descriptions of the sensing measurement session and the sensing measurement exchange, refer to the descriptions in the foregoing embodiments. Details are not described herein again.

In a possible implementation, if the SBP initiator also participates in sensing as a sensing responder, the proxy AP also establishes a sensing measurement session with the SBP initiator and performs sensing measurement exchange.

Then, the proxy AP feeds back a measurement result to the SBP initiator by using an SBP report message.

Then, either the proxy AP or the SBP initiator may terminate an SBP process by sending an SBP termination message.

Strictly speaking, the STA may be used to represent the STA and the AP. Therefore, when the list that responds to the STA and that is provided by the SBP initiator in the SBP request message includes an identifier of the AP (for example, a MAC address of the AP), the proxy AP should establish a sensing measurement session with the AP indicated by the identifier, to implement a measurement between APs.

In this embodiment, for ease of description, the AP indicated by the identifier of the AP included in the list of the sensing responder is also referred to as a sensing responder response AP.

However, in the conventional technology, the sensing measurement session can be performed only between the AP and the STA. Therefore, in this embodiment, to implement a measurement between APs when the list of sensing responders provided in the SBP request message includes the identifier of the AP, in the solution provided in this embodiment, the identifier of the sensing response end AP is included in the sensing measurement session request message sent by the proxy AP, so that the sensing measurement session can also be established between the proxy AP and the sensing responder AP.

For example, in an implementation solution, B16 to B31 in "TB sensing specific subelement" in the sensing measurement request message that is sent by the proxy AP and that is used to request to establish the sensing measurement session may be changed to the identifier of the sensing responder AP. (In the conventional technology, B16 to B31 is an identifier allocated to the STA.) Correspondingly, when feeding back a measurement result between the proxy AP and the sensing responder AP to the SBP initiator by using the SBP report message, the proxy AP may include an identifier of the sensing responder AP in the SBP report message, to indicate the sensing responder AP corresponding to the SBP report message.

Specifically, the identifier of the sensing responder AP may be understood as an identifier, and is set by the SBP initiator. A function of the identifier is similar to a function of the identifier of the second AP described above. When the proxy AP sends the sensing measurement report, the identifier of the sensing responder AP indicates, that CSI between the proxy AP and the sensing responder AP is measured. This further reduces overheads of the sensing measurement report message sent by the proxy AP.

In a possible implementation, the SBP initiator may notify the proxy AP of the identifier of the sensing responder AP by using an SBP request message. Further, the proxy AP notifies the sensing responder AP of the identifier of the sensing responder AP by using the sensing measurement request message.

It is noted herein that how to obtain the identifier of the AP is not limited in this embodiment.

For example, in an implementation, a correspondence between each AP and an identifier may be preset in advance.

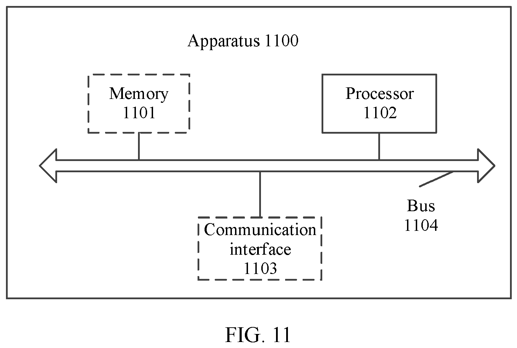

The foregoing describes in detail the communication method in embodiments of this application with reference to FIG. 7 to FIG. 9. The following describes provide a communication apparatus in embodiments of this application with reference to FIG. 10 and FIG. 11.

FIG. 10 is a diagram of a structure of a communication apparatus according to an embodiment of this application. Specifically, as shown in FIG. 10, the apparatus 1000 includes a transceiver module 1001 and a processing module 1002.

In a first embodiment, the communication apparatus is used in a first AP.

Specifically, in the first embodiment, the transceiver module 1001 is configured to receive a first message from a station STA, where the first message indicates the first AP to measure channel state information between the first AP and a second AP. The processing module 1002 is configured to measure the channel state information between the first AP and the second AP based on the first message. The transceiver module 1001 is further configured to feed back the channel state information to the STA.

In a possible implementation, the transceiver module 1001 is specifically configured to: receive a second message from the STA, where the second message indicates the first AP to feed back the channel state information; and feed back the channel state information to the STA based on the second message.

In a possible implementation, the transceiver module 1001 is specifically configured to: send a sensing measurement report message to the STA, where the sensing measurement report message includes first information, and the first information indicates that the sensing measurement report message is a sensing measurement report message that feeds back channel state information between APs.

In a possible implementation, the sensing measurement report message further includes identification information of the first AP and identification information of the second AP.

In a possible implementation, the sensing measurement report message further includes second information, and the second information indicates whether the channel state information exists in the sensing measurement report message.

In a possible implementation, when the sensing measurement report message is a sensing measurement report message that feeds back channel state information between APs, if the second information indicates that the channel state information does not exist, the sensing measurement report message further indicates that the first AP cannot monitor a null data physical layer protocol data unit NDP sent by the second AP.

In a possible implementation, the transceiver module 1001 is further configured to receive a third message from the STA, where the third message includes information used to request the first AP to perform a measurement between APs.

In a possible implementation, the third message further includes the identification information of the second AP, and the identification information of the second AP is used by the first AP to determine whether to perform a measurement between the first AP and the second AP.

In a possible implementation, the third message is a sensing measurement request message, and the sensing measurement request message is used by the STA to request the first AP to establish a sensing measurement session.

In a possible implementation, the first message includes the identification information of the second AP. After receiving the first message from the STA, the transceiver module 1001 is further configured to send a fourth message to the STA based on the identification information of the second AP, where the fourth message indicates that the first AP is capable of measuring channel state information between the first AP and the second AP.

In a possible implementation, the first message includes third information, and the third information indicates an NDP sent by the second AP.

In a possible implementation, the processing module 1002 is specifically configured to receive, based on the first message, a sensing null data physical layer protocol data unit announcement NDPA message sent by the STA to the second AP. The transceiver module 801 is further configured to receive the NDP sent by the second AP. The processing module 1002 is specifically configured to obtain channel state information between the first AP and the second AP based on the sensing NDPA message and the NDP sent by the second AP.

In a possible implementation, the transceiver module 1001 is further configured to send fourth information to the STA, where the fourth information indicates whether the first AP has a capability of performing a measurement between APs.

In a second embodiment, the communication apparatus is used in the STA.

Specifically, in the second embodiment, the transceiver module 1001 is configured to send a first message to a first access point AP, where the first message indicates the first AP to measure channel state information between the first AP and a second AP. The transceiver module 801 is further configured to receive the channel state information that is between the first AP and the second AP and that is measured by the first AP.

In a possible implementation, the transceiver module 1001 is further configured to send a second message to the first AP, where the second message indicates the first AP to feed back the channel state information.

In a possible implementation, the transceiver module 1001 is specifically configured to receive a sensing measurement report message sent by the first AP, where the sensing measurement report message includes first information, and the first information indicates that the sensing measurement report message is a sensing measurement report message that feeds back channel state information between APs.

In a possible implementation, the sensing measurement report message further includes identification information of the first AP and identification information of the second AP.

In a possible implementation, the sensing measurement report message further includes second information, and the second information indicates whether the channel state information exists in the sensing measurement report message.

In a possible implementation, before sending the first message, the transceiver module 1001 is further configured to send a third message to the first AP, where the third message includes information used to request the first AP to perform a measurement between APs.

In a possible implementation, the third message further includes the identification information of the second AP, and the identification information of the second AP is used by the first AP to determine whether to perform a measurement between the first AP and the second AP.

In a possible implementation, the third message is a sensing measurement request message, and the sensing measurement request message is used by the STA to request the first AP to establish a sensing measurement session.

In a possible implementation, the first message includes the identification information of the second AP, and the transceiver module 1001 is further configured to receive a fourth message sent by the first AP, where the fourth message indicates that the first AP can measure channel state information between the first AP and the second AP.

In a possible implementation, the first message includes third information, and the third information indicates an NDP sent by the second AP.

In a possible implementation, the transceiver module 1001 is further configured to receive fourth information sent by the first AP, where the fourth information indicates whether the first AP has a capability of performing a measurement between APs.

FIG. 11 is a diagram of a structure of a communication apparatus according to another embodiment of this application. The apparatus shown in FIG. 11 may be configured to perform the method according to any one of the foregoing embodiments.

As shown in FIG. 11, the apparatus 1100 in this embodiment includes a memory 1101 and a processor 1102. In an implementation, the apparatus 1100 further includes a communication interface 1103 and a bus 1104. The memory 1101, the processor 1102, and the communication interface 1103 are communicatively connected to each other through the bus 1104.

The memory 1101 may be a read-only memory (read only memory, ROM), a static storage device, a dynamic storage device, or a random access memory (random access memory, RAM). The memory 1101 may store a program. When the program stored in the memory 1101 is executed by the processor 1102, the processor 1102 is configured to perform steps of the methods shown in FIG. 4 to FIG. 8.

The processor 1102 may be a general-purpose central processing unit (central processing unit, CPU), a microprocessor, an application-specific integrated circuit (application-specific integrated circuit, ASIC), or one or more integrated circuits, and is configured to execute a related program, to implement the method shown in FIG. 4 to FIG. 8 in this application.

The processor 1102 may alternatively be an integrated circuit chip and has a signal processing capability. In an implementation process, the steps of the method in FIG. 4 to FIG. 8 in embodiments of this application may be completed by using an integrated logic circuit of hardware in the processor 1102 or by using instructions in a form of software.

The processor 1102 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be a conventional processor or the like.

The steps of the methods disclosed with reference to embodiments of this application may be directly executed and completed by a hardware decoding processor, or may be executed and completed by using a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory 1101. The processor 1102 reads information in the memory 1101, and completes, in combination with hardware of the processor 1102, functions that need to be performed by units included in the apparatus in this application. For example, the processor 1102 may perform steps/functions in the embodiments shown in FIG. 4 to FIG. 8.

The communication interface 1103 may use, but is not limited to, a transceiver apparatus such as a transceiver, to implement communication between the apparatus 1100 and another device or a communications network.

The bus 1104 may include a path for transferring information between components (for example, the memory 1101, the processor 1102, and the communication interface 1103) of the apparatus 1100.

It should be understood that, the apparatus 1100 shown in this embodiment of this application may be an electronic device, or may be a chip configured in an electronic device. The apparatus 1100 may be deployed in a terminal device, or may be deployed in a network device.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association between associated objects and represents that three relationships may exist. For example, A and/or B may represent the following three cases: only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of the embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash disk, a removable hard disk, a read-only memory, a random access memory, a magnetic disk, or an optical disc.

## Claims

1. A communication method, applied to a first access point AP, and comprising:
receiving a first message from a station STA, wherein the first message indicates the first AP to measure channel state information between the first AP and a second AP;
measuring the channel state information between the first AP and the second AP based on the first message; and
feeding back the channel state information to the STA.

2. The method according to claim 1, wherein the method further comprises:
receiving a second message from the STA, wherein the second message indicates the first AP to feed back the channel state information; and
feeding back the channel state information to the STA comprises:
feeding back the channel state information to the STA based on the second message.

3. The method according to claim 1 or 2, wherein feeding back the channel state information to the STA comprises:
sending a sensing measurement report message to the STA, wherein the sensing measurement report message comprises first information, and the first information indicates that the sensing measurement report message is a sensing measurement report message that feeds back channel state information between APs.

4. The method according to claim 2, wherein the sensing measurement report message further comprises identification information of the first AP and identification information of the second AP.

5. The method according to claim 3 or 4, wherein the sensing measurement report message further comprises second information, and the second information indicates whether the channel state information exists in the sensing measurement report message.

6. The method according to claim 5, wherein when the sensing measurement report message is the sensing measurement report message that feeds back channel state information between APs, if the second information indicates that the channel state information does not exist, the sensing measurement report message further indicates that the first AP cannot receive a null data physical layer protocol data unit NDP of the second AP.

7. The method according to any one of claims 1 to 6, wherein before receiving the first message, the method further comprises:
receiving a third message from the STA, wherein the third message comprises information used to request the first AP to perform a measurement between APs.

8. The method according to claim 7, wherein the third message further comprises the identification information of the second AP, and the identification information of the second AP is used by the first AP to determine whether to perform a measurement between the first AP and the second AP.

9. The method according to claim 8, wherein the third message is a sensing measurement request message, and the sensing measurement request message is used by the STA to request the first AP to establish a sensing measurement session.

10. The method according to any one of claims 1 to 9, wherein the first message comprises the identification information of the second AP, and after receiving the first message from the STA, the method further comprises:
sending a fourth message to the STA based on the identification information of the second AP, wherein the fourth message indicates that the first AP is capable of measuring the channel state information between the first AP and the second AP.

11. The method according to any one of claims 1 to 10, wherein the first message comprises third information, and the third information indicates the NDP sent by the second AP.

12. The method according to any one of claims 1 to 11, measuring the channel state information between the first AP and the second AP based on the first message comprises:
receiving, based on the first message, a sensing null data physical layer protocol data unit announcement NDPA message sent by the STA to the second AP;
receiving the NDP sent by the second AP; and
obtaining the channel state information between the first AP and the second AP based on the NDP sent by the second AP and the sensing NDPA message.

13. The method according to any one of claims 1 to 12, wherein the method further comprises:
sending fourth information to the STA, wherein the fourth information indicates whether the first AP has a capability of performing a measurement between APs.

14. A communication method, applied to a station STA, and comprising:
sending a first message to a first access point AP, wherein the first message indicates the first AP to measure channel state information between the first AP and a second AP; and
receiving the channel state information that is between the first AP and the second AP and that is measured by the first AP.

15. The method according to claim 14, wherein the method further comprises:
sending a second message to the first AP, wherein the second message indicates the first AP to feed back the channel state information.

16. The method according to claim 14 or 15, wherein receiving the channel state information that is between the first AP and the second AP and that is measured by the first AP comprises:
receiving a sensing measurement report message sent by the first AP, wherein the sensing measurement report message comprises first information, and the first information indicates that the sensing measurement report message is a sensing measurement report message that feeds back channel state information between APs.

17. The method according to claim 16, wherein the sensing measurement report message further comprises identification information of the first AP and identification information of the second AP.

18. The method according to claim 16 or 17, wherein the sensing measurement report message further comprises second information, and the second information indicates whether the channel state information exists in the sensing measurement report message.

19. The method according to any one of claims 14 to 18, wherein before sending the first message, the method further comprises:
sending a third message to the first AP, wherein the third message comprises information used to request the first AP to perform a measurement between APs.

20. The method according to claim 19, wherein the third message further comprises the identification information of the second AP, and the identification information of the second AP is used by the first AP to determine whether to perform a measurement between the first AP and the second AP.

21. The method according to claim 20, wherein the third message is a sensing measurement request message, and the sensing measurement request message is used by the STA to request the first AP to establish a sensing measurement session.

22. The method according to any one of claims 14 to 21, wherein the first message comprises the identification information of the second AP, and the method further comprises:
receiving a fourth message sent by the first AP, wherein the fourth message indicates that the first AP is capable of measuring the channel state information between the first AP and the second AP.

23. The method according to any one of claims 14 to 22, wherein the first message comprises third information, and the third information indicates an NDP sent by the second AP.

24. The method according to any one of claims 14 to 23, wherein the method further comprises:
receiving fourth information sent by the first AP, wherein the fourth information indicates whether the first AP has a capability of performing a measurement between APs.

25. A communication apparatus, comprising a processor, wherein
the processor is configured to, by executing a computer program and/or using a logic circuit, enable the communication apparatus to implement the method according to any one of claims 1 to 13.

26. A communication apparatus, comprising a processor, wherein
the processor is configured to, by executing a computer program and/or using a logic circuit, enable the communication apparatus to implement the method according to any one of claims 14 to 24.

27. A communication system, comprising the communication apparatus according to claim 24 and the communication apparatus according to claim 25.

28. A computer-readable medium, wherein the computer-readable medium stores program code to be executed by a computer, and the program code comprises instructions used for performing the method according to any one of claims 1 to 13 or claims 14 to 24.

29. A computer program product, wherein the computer program product comprises computer program code, and when the computer program code is run on a computer, the computer is enabled to implement the method according to any one of claims 1 to 13 or claims 14 to 24.

30. A chip, comprising at least one processor and a communication interface, wherein the communication interface and the at least one processor are interconnected through a line, and the at least one processor is configured to run a computer program or instructions, to perform the communication method according to any one of claims 1 to 13 or the communication method according to any one of claims 14 to 24.
